Europäisches Patentamt

European Patent Office

Office européen des brevets

(19)

(11)    EP 0 708 959 B1

(12)    EUROPEAN PATENT SPECIFICATION

(45) Date of publication and mention
of the grant of the patent:
**22.09.1999  Bulletin 1999/38**

(21) Application number: **94921491.0**

(22) Date of filing: **07.07.1994**

(51) Int Cl.$^6$: **G10L 9/00**

(86) International application number:
**PCT/US94/07651**

(87) International publication number:
**WO 95/02240 (19.01.1995 Gazette 1995/04)**

(54) **A FIXED BIT RATE SPEECH ENCODER/DECODER**

SPRACHKODIERER/-DEKODIERER MIT FESTER BITRATE

CODEUR/DECODEUR DE PAROLE A DEBIT BINAIRE FIXE

(84) Designated Contracting States:
**DE FR GB**

(30) Priority: **07.07.1993 US 88309**
**08.10.1993 US 134405**

(43) Date of publication of application:
**01.05.1996  Bulletin 1996/18**

(73) Proprietor: **PICTURETEL CORPORATION**
**Peabody, MA 01960 (US)**

(72) Inventors:
• **CROSSMAN, Antony, Henry**
**Swampscott, MA 01907 (US)**

• **HELF, Brant, Martin**
**Brookline, MA 02146 (US)**
• **HUANG, Jixiong**
**Brighton, MA 02135 (US)**

(74) Representative: **Blatchford, William Michael et al**
**Withers & Rogers**
**Goldings House,**
**2 Hays Lane**
**London SE1 2HW (GB)**

(56) References cited:
EP-A- 0 508 581          US-A- 4 538 234
US-A- 4 949 383          US-A- 4 964 166
US-A- 5 042 069          US-A- 5 150 387

**Description**

This invention relates to the encoding and subsequent decoding of audio signals transmitted over a communications channel.

The combined bandwidth of audio and video signals to be transmitted in teleconferencing and videoconferencing applications often exceeds the bandwidth of the available communications channel. As a result, techniques have been developed to compress the audio and video signals so that they can be transmitted using less bandwidth without significant degradation in signal quality.

To allow comparison of different compression approaches, various standards organizations have developed guidelines for acceptable signal quality. One such standard is the international seven kilohertz audio standard, CCITT recommendation G.722, which provides quality guidelines for digital transmission of seven kilohertz audio signals at a transmission rate of 48,000 bits per second.

EP-A-0 508 581 (AT & T) describes compression of signals using a perceptual model that determines whether to encode certain frequency bands. Based on an input signal and a perceptual model, a "just noticeable difference" (jnd) noise spectrum is computed. Frequency bands of the input signal selected to be encoded are those with the greatest energy relative to the jnd energy in the same band.

EP-A 0 508 581 describes prior art transform coding and linear predictive coding techniques. In transform coding, the signal is divided into segments that are sampled and transformed into a set of frequency domain transform coefficients. The coefficient signals then are quantized and transmitted. Bit allocation techniques may be used to ensure that transmission of the coefficients may be achieved in the available bandwidth. One allocation technique allocates bits to the coefficients in a manner that attempts to achieve a constant bandwidth.

In linear predictive coding, a signal segment is predicted from historical information and an error signal is derived by subtracting the predicted signal from the actual signal. The error signal then is transformed and weighted by a noise-perception frequency-sensitive function to produce a modified transform that is encoded and transmitted.

According to the invention, there is provided a method of transmitting a digital signal that includes frames of frequency coefficiencies arranged in bands, said frequency coefficients for each frame being represented by a frame-determined number of bits, the method comprising for each frame the steps of generating a class value of each of the bands that corresponds to the energy in a band relative to the average energy in the other bands (203), reducing said number of bits, when said number of bits exceeds a predetermined threshold, to a value that is less than or equal to said predetermined threshold by eliminating those of said frequency coefficients that belong to the bands having the smallest class values (222), and transmitting said frequency coefficients that were not eliminated in said reducing step (226).

Using the methods described hereinafter it is possible to provide a compression scheme that offers equivalent quality to that of CCITT recommendation G.722, but at a transmission rate of only 24,000 bits per second, and therefore provides for more efficient use of available digital transmission bandwidth. In videoconferencing applications, this reduction in the transmission rate required for audio transmission means that more transmission bandwidth is available for transmission of video images, which thereby improves the video quality and overall videoconferencing system performance.

By eliminating the frequency coefficients that have low class values, the frequency coefficients having the most signal content are transmitted when only a portion of the frequency coefficients can be transmitted.

In preferred embodiments, a spectral estimate of the energy in each of the bands is generated, and the spectral estimates are used in generating the class values. In addition, a step size for each of the frequency coefficients is generated based on the spectral estimate for the corresponding band, with the step size for a frequency coefficient in a band having relatively higher energy being larger than the step size for a frequency coefficient in a band having relatively lower energy.

The frequency coefficients are quantized based on 35 the relationship between the value of the frequency coefficient and the corresponding step size to produce quantized frequency coefficients that are then reduced, if necessary, and transmitted. For frequency bands having a class value of zero, no quantized frequency coefficients are generated or transmitted.

By varying the step size for a frequency coefficient with the energy in the corresponding frequency band more coding distortion can be placed in high energy bands, where the higher signal energy is better able to perceptually mask the distortion, than in low energy bands, where the distortion would be less easily masked. As a result, a listener does not readily perceive the distortion.

Generally, the quantized frequency coefficients are encoded using an entropy coding scheme in which consecutive quantized frequency coefficients having values of zero are jointly encoded. Typically, this coding scheme relies on the class values and is based on Huffman coding.

Finally, to further control the number of bits needed to represent the quantized frequency coefficients, which are based in part on the class values, the class values are modified.

The invention will now be described by way of example with reference to the drawings in which:

Fig. 1 is a block diagram of an encoder according to a preferred embodiment of the invention;
Figs. 2-3 are flow charts of procedures used by a spectral estimate quantizer and a quantizer rule generator of the encoder of Fig. 1;
Figs. 4-5 are graphs illustrating aspects of the procedure of Fig. 3;
Figs. 6-7 are flow charts of procedures used by a quantizer of the encoder of Fig. 1;
Fig. 8 is a block diagram of a decoder for the encoder of Fig. 1.

The attached Appendix contains Huffman enconder tables.

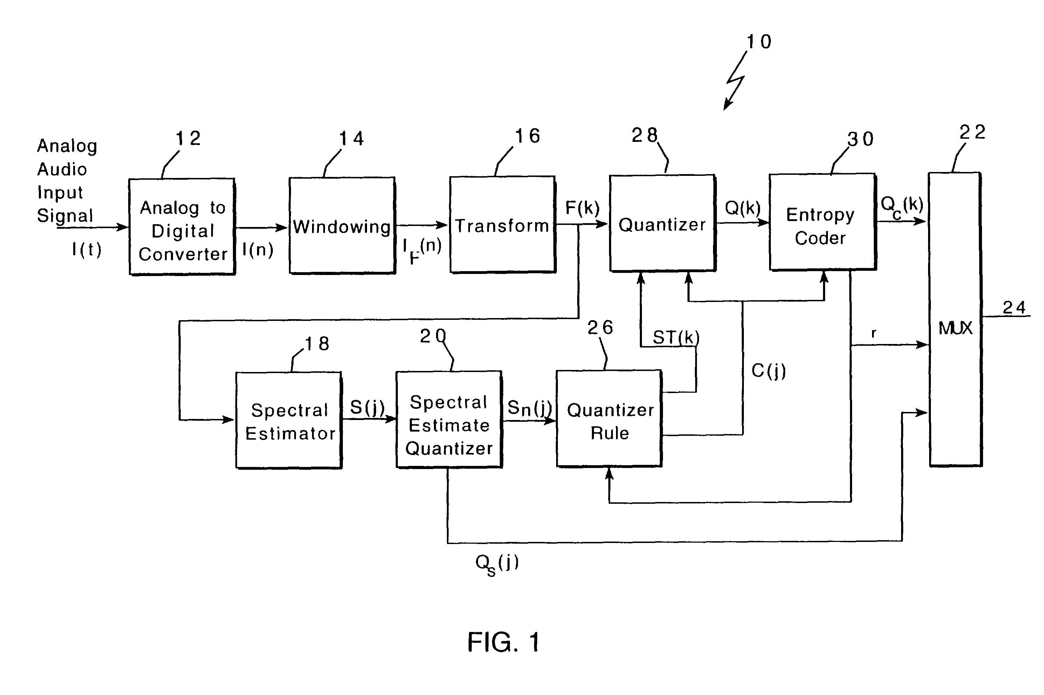

Referring to Fig. 1, a fixed bit rate speech encoder 10 encodes an analog audio input signal, I(t), where t is a variable representing time, for transmission over a digital transmission channel 24. Encoder 10 compresses analog audio input signal I(t) by eliminating unnecessary components such as low-energy background noise and by minimizing redundant information.

Initially, an analog-to-digital converter 12 converts analog audio input signal I(t) into a digital input signal, I(n), where n is an integer representing a moment in time. Since analog-to-digital converter 12 samples at sixteen kilohertz, digital input signal I(n) includes 16,000 samples each second.

A windowing module 14 receives digital input signal I(n) and separates the samples of I(n) into frames $I_F(n)$ that, in the illustrated embodiment, consist of 512 consecutive samples. Thus, windowing module 14 groups samples that each represent the state of audio input signal I(t) at a moment in time into frames that represent this state over a more extended duration. To reduce the effects of discontinuities introduced at the beginning and end of the frames, each frame includes the last 32 samples from the previous frame and 480 new samples, with the first 32 and last 32 samples being appropriately weighted. The last 32 samples of the current frame are saved in a buffer for use at the beginning of the next frame. Accordingly, a frame is generated every thirty milliseconds.

A discrete cosine transform (DCT) transform module 16 then converts each 512 sample frame to a collection of 512 frequency coefficients, F(k), where k is an integer representing a discrete frequency in the frame's spectrum. Frequency coefficients F(k) represent the frequency spectrum of the frame and show the extent to which each frequency was present in input audio signal I(t) during the duration represented by the frame. Because the 52 highest frequency coefficients correspond to frequencies that are outside the frequency range of interest (that is, they are not frequencies normally associated with human speech), only the first 460 frequency coefficients F(k) are used in later processing. These 460 frequency coefficients correspond to a bandwidth of approximately 7.2 kHz (15.625 Hz per F(k)). Of course, the concepts presented here are equally applicable to other bandwidths, sampling rates, and bit transmission rates.

Next, a spectral estimator 18 generates a spectral estimate S(j) where j is an integer representing a frequency band. Spectral estimate S(j) is a contour derived from the frequency coefficients F(k), and provides a coarse representation of the spectral envelope. Encoder 10 uses spectral estimate S(j) as a guideline to the characteristics of frequency coefficients F(k). In the illustrated embodiment, spectral estimate S(j) includes 23 components that are generated from the first 460 frequency coefficients F(k), and each represents the average power of a band of twenty frequency coefficients. The components of spectral estimate S(j) are generated according to equation 1:

$$S(j) = (\sum_{i=0}^{i=19} (F(20j + i))^2)/20 \qquad (1)$$

where j ranges from 0 to 22.

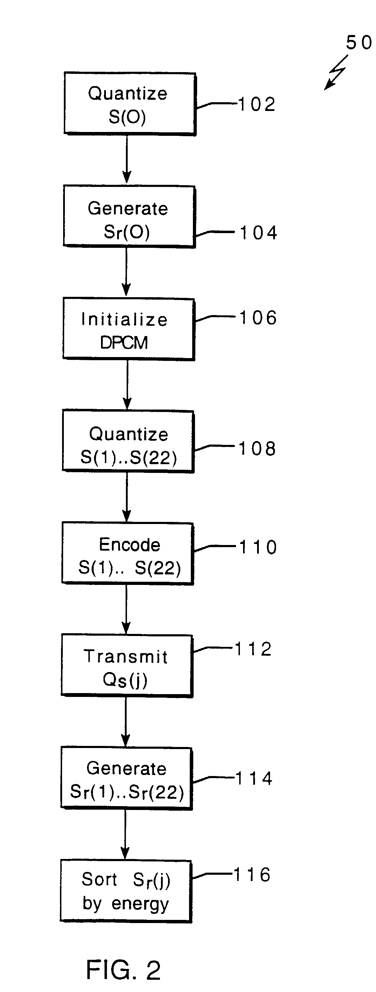

A spectral estimate quantizer 20 quantizes the components of spectral estimate S(j) using the well known concept of differential pulse code modulation (DPCM), in which each number in a series of numbers is represented by the difference between it and the previous number. For example, a DPCM encoder with unity feedback that was initialized to zero would encode the series 1, 2, 4, 4 as 1 (1 - 0), 1 (2 - 1), 2 (4 - 2), 0 (4 - 4). The procedure 100 followed by spectral estimate quantizer 20 is illustrated in Fig. 2 and described in more detail below.

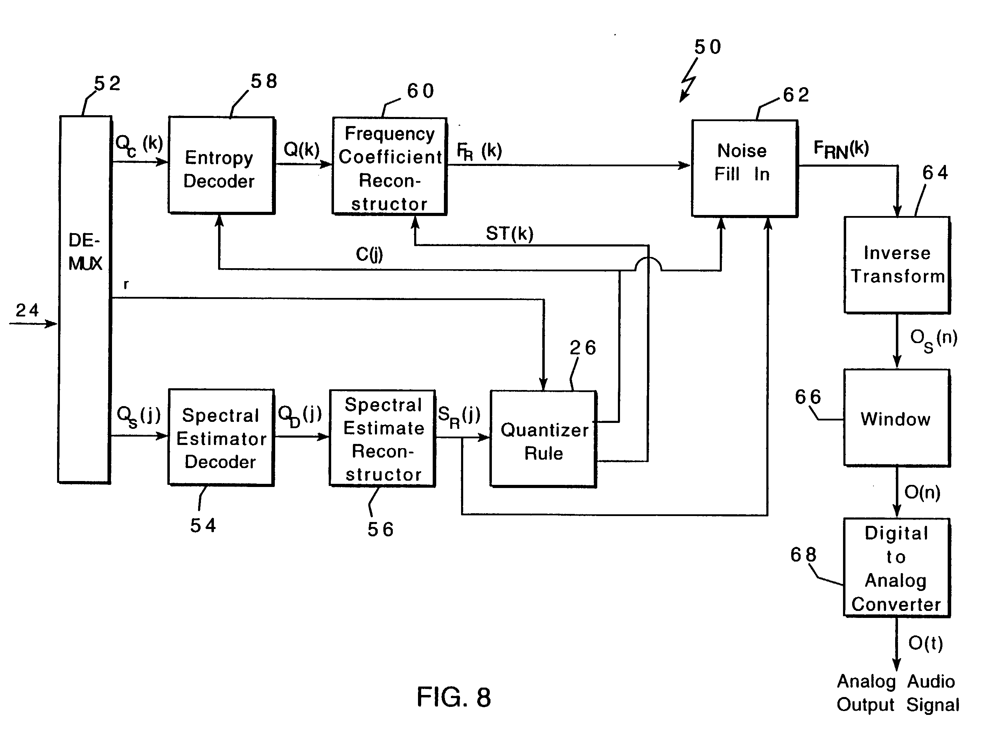

The quantized spectral estimate components, $Q_{S(j)}$, are sent to a multiplexer 22 for transmission along a digital transmission channel 24. A decoder 50 (see Fig. 8), at the other end of digital transmission channel 24, reconstructs spectral estimate S(j) from quantized spectral estimate $Q_{S(j)}$, and uses the reconstructed spectral estimate, $S_r$(j), in generating an audio output signal. However, due to the operation of spectral estimate quantizer 20, reconstructed spectral estimate $S_r$(j) does not equal S(j). Therefore, spectral estimate quantizer 20 includes a duplicate of the spectral estimate decoding reconstructor 56 (Fig. 8) used by decoder 50 (Fig. 8) to reconstruct spectral estimate S(j), and generates a reconstructed spectral estimate $S_r$(j) for use in later processing.

Referring also to Fig. 2, spectral estimate quantizer 20 quantizes the first component, S(0), of spectral estimate S(j) differently than the other components, and does so because S(0) includes direct current gain information. Spectral estimate quantizer 20 quantizes the value of S(0) using a mid-tread quantizer with a 6 dB step size to produce $Q_{S(0)}$ (step 102). A mid-tread quantizer assigns the same output value to all inputs falling within a single step, and bases this output value on the middle of the step. For example, with a 6 dB step size, inputs greater than or equal to negative three and less than three are assigned an output value of zero, and inputs greater than or equal to three and less than nine are assigned an output value of one. Four bits are used to represent $Q_{S(0)}$, which allows a dynamic range of 96 dB ($2^4 * 6$ dB). Next, $Q_{S(0)}$ is reconstructed to produce $S_r(0)$ (step 104).

Spectral estimate quantizer 20 then initializes a DPCM encoder using $S_r(0)$ (step 106). Thereafter, spectral estimate quantizer 20 quantizes the remaining 22 spectral estimate components, S(1) ... S(22), using the DPCM encoder, which is a first order mid-tread DPCM encoder having a 6 dB step size and unity feedback (step 108). The quantized values are all integers between -8 and 14 (which, as shown in Table 1, allow for Huffman codes of fifteen bits or less). The quantized values are then Huffman coded according to Table 1 to produce $Q_{S(1)}$ ... $Q_{S(22)}$ (step 110).

| Quantized Value | Huffman Code |
|---|---|
| -8 | 00001001100111 |
| -7 | 000010011001100 |
| -6 | 000010011001101 |
| -5 | 000010011000 |
| -4 | 00001010 |
| -3 | 000011 |
| -2 | 0001 |
| -1 | 01 |
| 0 | 1 |
| 1 | 001 |
| 2 | 000001 |
| 3 | 00001011 |
| 4 | 0000100111 |
| 5 | 000010010 |
| 6 | 000000101 |
| 7 | 000000000 |
| 8 | 000000100 |
| 9 | 00001000 |
| 10 | 00000001 |
| 11 | 00000011 |
| 12 | 000000001 |
| 13 | 00001001101 |
| 14 | 0000100110010 |

**Table 1**

The encoded values, $Q_{S(1)}$ ... $Q_{S(22)}$ for the frame, along with the four bits of $Q_{S(0)}$, are transmitted to multiplexer 22 (step 112). Encoded values $Q_{S(1)}$ ... $Q_{S(22)}$ are reconstructed to produce reconstructed spectral estimates $S_r(1)$ ... $S_r(22)$ (step 114). Finally, reconstructed spectral estimates $S_r(1)$ ... $S_r(22)$ are sorted according to their energy levels (step 116).

Referring again to Fig. 1, a quantizer rule generator 26 accepts reconstructed spectral estimate $S_r(j)$ and a rate index, r, as inputs. Quantizer rule generator 26 produces class values, C(j), related to each twenty coefficient band of frequency coefficients represented by a reconstructed spectral estimate $S_r(j)$, and step sizes, ST(k), related to each frequency coefficient F(k).

Quantizer rule generator 26 produces step sizes ST(k) that vary with the signal energy of the frequency coefficient F(k), producing large step sizes for frequencies having high signal energy and smaller step sizes for frequencies having lower signal energy. By varying the step size, quantizer rule generator 26 exploits a phenomenon of the human auditory system that allows more distortion in high energy (peak) regions of the frequency spectrum than in low energy (trough) regions. Because high signal energy in peak regions is better able to mask quantization distortion introduced in those regions, the listener does not readily perceive the distortion and encoder 10 need not minimize the quantization distortion. Similarly, because low signal energy in trough regions is less able to mask quantization distortion introduced in those regions, encoder 10 minimizes quantization distortion in those regions.

As one aspect of achieving this advantage, as is discussed in more detail below, the frequency coefficients that correspond to trough regions having very low energy are assigned a class value C(j) of zero. Those frequency coefficients with a class value C(j) of zero are not quantized or transmitted at all. As is also discussed below, decoder 50 (Fig. 8) uses a technique called noise-fill-in to minimize any distortion in the reconstructed speech resulting from the failure to transmit low energy frequency coefficients.

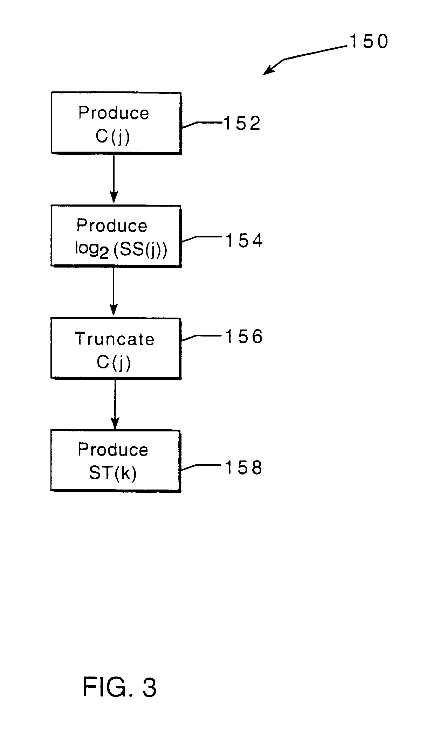

Referring also to Fig. 3, quantizer rule generator 26 performs a procedure 150. First, quantizer rule generator 26 produces class values C(j) for each of the 23 components of spectral estimate S(j) (step 152). Each class value applies to a band of twenty frequency coefficients (the same band that was used to derive the respective S(j)), and relates the energy in the band to the average energy of the other bands in the frame. Quantizer rule generator 26 produces class values using equation 2:

$$C(j) = r + \frac{1}{2}\log_2(S_r(j)^2) - \frac{1}{2D}\sum_{j=0}^{j=D-1}\log_2(S_r(j)^2) \qquad \textbf{(2)}$$

where r is a rate index relating to bit usage as described below and supplied by an entropy coder 30, and D = 23, the number of spectral estimate components. Generally, the more energy in a band, relative to the average energy of all of the bands in the frame, the higher the class value C(j).

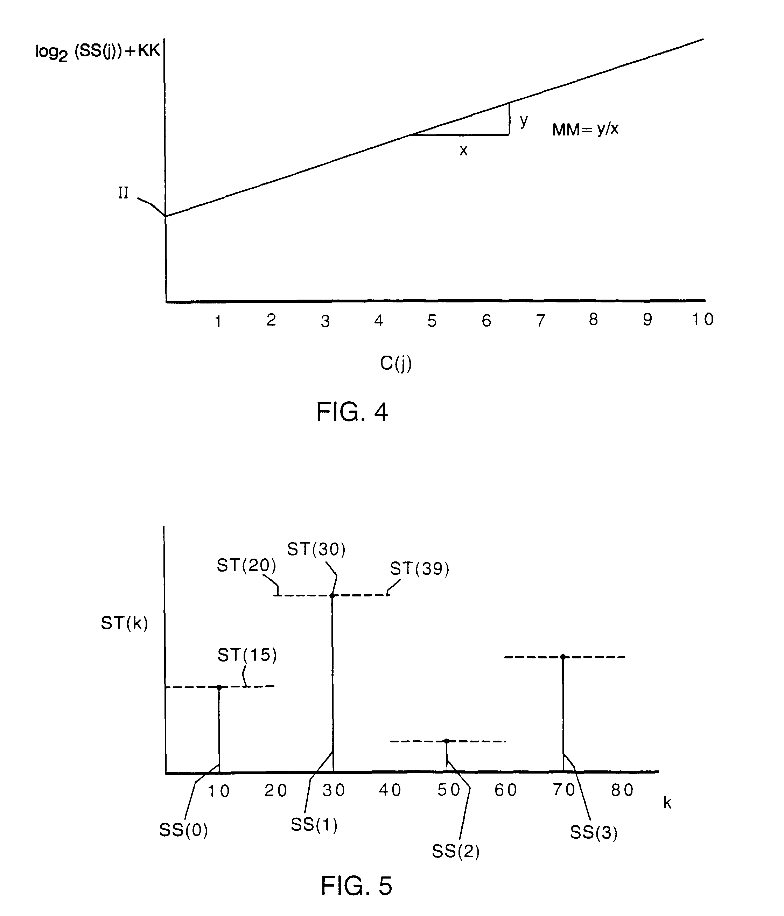

Referring also to Fig. 4, quantizer rule generator 26 defines a log step size parameter, $\log_2(SS(j))$, for each of the 23 reconstructed components of spectral estimate $S_r(j)$ using equation 3 (step 154) as:

$$\log_2(SS(j)) = MM * C(j) - KK + II \qquad (3)$$

where KK is defined in equation 4:

$$KK = r - \frac{1}{2D}\sum_{j=0}^{j=D-1}\log_2(S_r(j)^2) \qquad \textbf{(4)}$$

As shown in Fig. 4, II is the intercept and MM is the slope of a predefined straight line segment. Thus, if the value of $\log_2(SS(j))$ were being selected visually, one would find the point on the line segment corresponding to the appropriate value of C(j) and subtract KK. In the illustrated implementation, values for MM and II, which are constant for all inputs to quantizer rule generator 26, are 0.2076 and 1.8839 respectively. For a given set of inputs to quantizer rule generator 26, KK is also constant.

After producing the log step sizes at step 154, quantizer rule generator 26 converts class values C(j) to integer form (step 156). Quantizer rule generator 26 does so by truncating the class values according to equations 5, 6, and 7:

$$C(j) = \lfloor C(j) + 1 \rfloor \qquad (5)$$

$$C(j) = 0 \ \textit{if} \lfloor C(j) + 1 \rfloor < 0 \qquad (6)$$

$$C(j) = 10 \ \textit{if} \lfloor C(j) + 1 \rfloor > 10 \qquad (7)$$

As is discussed below, the twenty frequency coefficients F(k) that correspond to the spectral estimate S(j) for any class value C(j) that equals zero are not quantized or transmitted.

Referring also to Fig. 5, quantizer rule generator 26 produces step sizes ST(k) for the 460 frequency coefficients F(k) from the inverse logarithms of the log step sizes $\log_2(SS(j))$ produced from the components of spectral estimate S(j) (step 158). Thus, the step size ST(k) for all frequency coefficients F(k) in a twenty coefficient band equals the step size SS(j) for the spectral estimate S(j) that corresponds to that band.

A quantizer 28 quantizes those of the first 460 frequency coefficients F(k) that have a class value greater than zero to produce quantized coefficients Q(k). The frequency coefficients F(k) having a class value equal to zero are not quantized because they are not transmitted over digital transmission channel 24. Each frequency coefficient F(k) is quantized using a mid-tread quantizer with a step size equal to the ST(k) produced by quantizer rule generator 26 for that frequency coefficient. The values of the quantized coefficients Q(k) are restricted to predetermined numerical ranges for each class value according to Table 2. Limiting the range of output values based on class values allows the memory space occupied by Huffman encoding tables in entropy coder 30 to be determined in advance, because the size of the Huffman encoding tables is based on the range, and hence number, of values to be encoded.

Table 2

| Class Value | Range of Ouantized Coefficients |
|---|---|
| 0 | 0 |
| 1 | -3 to 3 |
| 2 | -7 to 7 |
| 3 | -15 to 15 |
| 4 | -15 to 15 |
| 5 | -31 to 31 |
| 6 | -63 to 63 |
| 7 | -127 to 127 |
| 8 | -127 to 127 |
| 9 | -255 to 255 |
| 10 | -255 to 255 |

Entropy coder 30 encodes quantized coefficients Q(k) to produce coded coefficients $Q_c(k)$. Entropy coder 30 uses a coding technique that attempts to ensure that as much bandwidth compression as possible is achieved so that the maximum number of coded coefficients $Q_c(k)$ that are actually transmitted is as large as possible without sacrificing audio quality. By maximizing the number of coded coefficients that are transmitted, entropy coder 30 ensures that the audio output produced by decoder 50 (Fig. 8) is of the highest possible quality for the available digital transmission bandwidth (i.e., 24,000 bits per second).

The coding technique used by entropy coder 30 includes a unique feedback loop that includes entropy coder 30, quantizer rule generator 26, and quantizer 28. Through the feedback loop, entropy coder 30 controls the number of bits needed to represent the coded coefficients $Q_c(k)$ of each frame. Entropy coder 30 does so by iteratively adjusting the value of rate index r and supplying the adjusted value to quantizer rule generator 26. Rate index r controls the step sizes ST(k) and class values C(j) output by quantizer rule generator 26 which, in turn, control the precision of the quantized coefficients Q(k) output by quantizer 28. Because the number of bits needed to represent coded coefficients $Q_c(k)$ is directly related to the precision of the quantized coefficients Q(k) (and increases with increasing precision), entropy coder 30 controls this number of bits by controlling rate index r. For example, when the number of bits needed to represent coded coefficients $Q_c(k)$ for a frame exceeds the number that can be transmitted, entropy coder 30 reduces the rate index r. This reduces the precision of quantized coefficients Q(k) by (a) increasing the step size for each frequency coefficient and (b) tending to reduce the class value for a particular band.

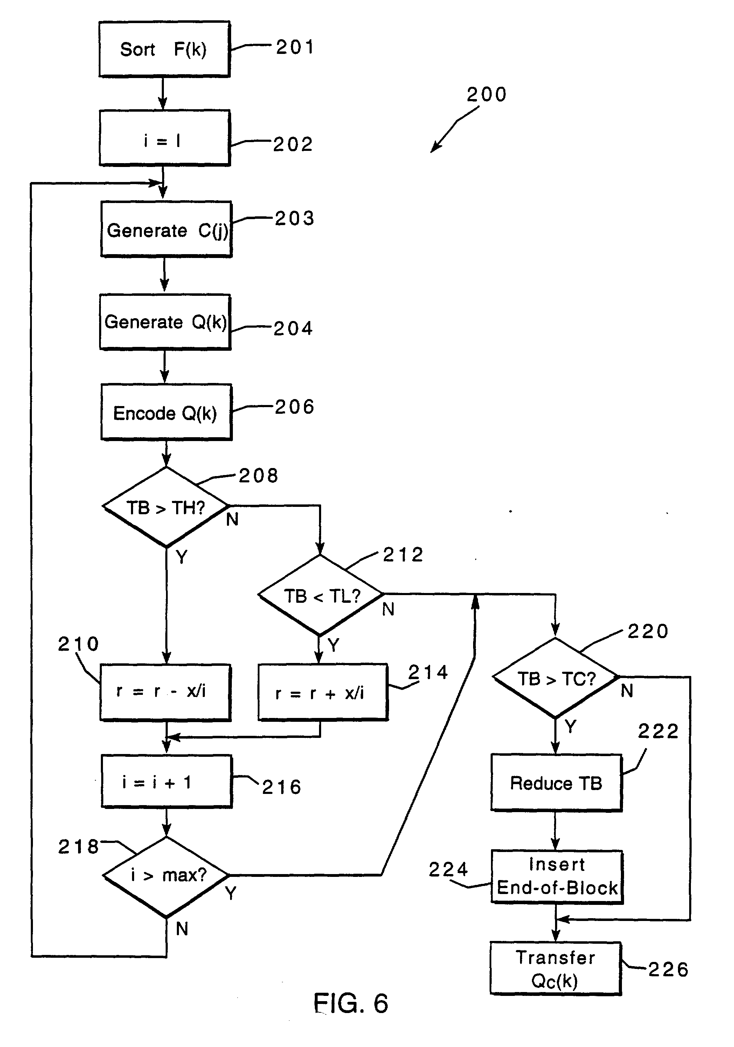

Referring also to Fig. 6, the combination of entropy coder 30, quantizer 28, and quantizer rule 26 produces coded coefficients $Q_c(k)$ for each input frame using a procedure 200 that relies on the feedback mechanism discussed above to control the final number of bits used. The feedback maintained through rate index r enables entropy coder 30 to ensure that the available channel bandwidth of 24,000 bits per second (or 720 bits per input frame) is fully utilized. The feedback governs the total number of bits used for encoding so that the total is as close as possible to that allowed for the transmission of a given frame (720 bits) over digital transmission channel 24.

First, quantizer 28 sorts frequency coefficients F(k), with each twenty coefficient band of frequency coefficients F(k) being repositioned based on the sorted position of the corresponding reconstructed spectral estimate $S_r(j)$ (step 201). For example, if $S_r(5)$ has the highest energy level and has been moved to the beginning of the list of the reconstructed spectral estimates, F(100) ... F(119) would be moved to the beginning of the list of frequency coefficients.

Next, entropy coder 30 initializes rate index r to 0.1 (a value that has proven useful in the illustrated embodiment) and an iteration count, i, to 1 (step 202). Quantizer rule 26 then generates class values C(j) based on rate index r and sorted, reconstructed spectral estimates $S_r(j)$ (step 203). Based on class values C(j) and sorted frequency coefficients F(k), quantizer 28 generates quantized coefficients Q(k) (step 204).

Using class values C(j) to control Huffman coding of the corresponding group of Q(k) according to a procedure 250 discussed in more detail below, entropy coder 30 encodes quantized coefficients Q(k) to produce coded coefficients

$Q_c(k)$ (step 206). As discussed below, while encoding quantized coefficients $Q(k)$, entropy coder 30 sets TB, the total number of bits needed to represent the frame, equal to the sum of (a) the number of bits in coded coefficients $Q_c(k)$, (b) the number of bits in the quantized spectral estimates $Q_{S(j)}$, and (c) the number of bits needed to represent r.

Next, entropy coder 30 determines whether TB exceeds TH, an upper threshold (step 208). In the illustrated embodiment, this upper threshold equals 756 and therefore exceeds TC, the number of bits allowed for transmission over digital transmission channel 24, which equals 720. If TB is greater than TH, entropy coder 30 reduces the index rate (step 210), which will in turn reduce the total number of bits needed to encode the frame during the next iteration (when compared to the previous rate index r) according to equation 8:

$$r = r - \frac{c}{i} \tag{8}$$

where i is the iteration count and c is a constant equal to 0.45. The iteration count is used in modifying rate index r so that, with each iteration, rate index r will change by a smaller amount. This allows rate index r to approach an optimum value. For example, if the initial value for rate index r produced a TB that was too large (because rate index r was too large), and the first iteration value for rate index r produced a TB that was too small (because the adjusted rate index r was too small), then the second iteration value for rate index r is likely to produce an acceptable TB (because the new rate index r, as described below, will be somewhere between the previous two values that were either too large or too small).

If TB is not greater than TH, entropy coder 30 determines whether TB is less than TL, a lower threshold (step 212). In the illustrated embodiment, TL equals 720 and therefore also equals TC. If TB is less than TL, entropy coder 30 increases the index rate (step 214), which will in turn increase the total number of bits needed to encode the frame during the next iteration (when compared to the previous rate index r) according to equation 9:

$$r = r + \frac{c}{i} \tag{9}$$

where i is the iteration count and c is a constant equal to 0.45.

If TB is greater than TH or less than TL, entropy coder 30 increments the iteration count (step 216) and determines whether the new iteration count exceeds a predetermined maximum (which equals four in the illustrated embodiment) (step 218). If the iteration count does not exceed the maximum, then, for the same frame, quantizer rule 26 generates new class values C(j) (step 203) and quantizer 28 generates new quantized coefficients Q(k) (step 204) that are encoded by entropy coder 30 (step 206).

If the iteration count exceeds the maximum, or if TB is not greater than TH and is not less than TL, entropy coder 30 determines whether TB is greater than TC (step 220). If so, entropy coder 30 reduces the number of coded coefficients $Q_c(k)$ in the frame to be transferred (step 222) by starting with the coefficient corresponding to the highest frequency within the band having the lowest class value and working toward the coefficient corresponding to the lowest frequency within the band having the highest class value, and does so until TB is less than or equal to TC minus sixteen. After reducing the number of coded coefficients $Q_c(k)$ to be transferred, entropy coder 30 inserts at the end of coded coefficients $Q_c(k)$ an end-of-block symbol that can be up to sixteen bits long (step 224). This symbol indicates to the decoder that not all quantized coefficients Q(k) were encoded for transfer as coded coefficients $Q_c(k)$. Finally, entropy coder 30 transmits coded coefficients $Q_c(k)$ to multiplexer 22 (step 226).

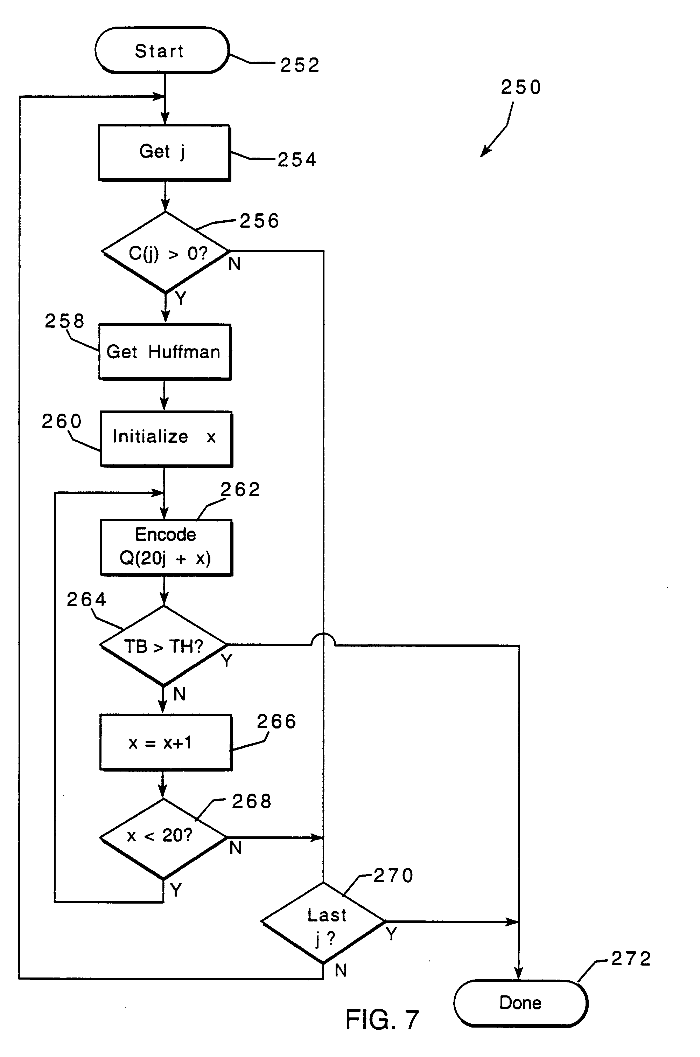

Referring now to Fig. 7, to produce coded coefficients $Q_c(k)$ and to determine TB for a particular value of rate index r, after startup (step 252) entropy coder 30 gets a value for j (step 254). The value of j is based on the sorted order of quantized coefficients Q(k). For example, if the first quantized coefficient Q(k) is Q(40), entropy coder 30 sets j equal to two (that is, j equals two when k equals 40 to 59).

Entropy coder 30 then determines whether class value C(j) is greater than zero (step 256). If so, entropy coder 30 selects a Huffman encoder table based on the class value C(j) (step 258). There are ten Huffman encoder tables, one for each of the class values C(j) between one and ten. The Huffman encoder table for class values of one appears below as Table 4, the Huffman encoder tables for class values from two to ten are included in the attached Appendix. As already noted, no quantized coefficients Q(k) are produced when the associated class value C(j) equals zero, so a Huffman encoder table is not needed for this class value. After selecting the Huffman encoder table, entropy coder 30 initializes a variable x (step 260). In most cases, x will be initialized to a zero. However, when, as discussed below, a run of consecutive zeros includes a band boundary, x will be initialized to some other value to account for the run of consecutive zeros.

Based on the selected Huffman encoder table, entropy coder 30 jointly encodes quantized coefficient Q(20 j + x) and any subsequent quantized coefficients having consecutive values of zero, up to a run of fifteen such coefficients (step 262). When such subsequent zero-valued quantized coefficients exist, entropy coder 30 updates j and increments x as needed to account for the encoded coefficients. For example, if j equals 3 and x equals 15 and the quantized coefficient Q(75) is followed by a run of four consecutive zeros (which would complete the band defined by j equalling 3), entropy coder 30 would set x equal to 19. If the next band began with, for example, a series of five additional consecutive zeros, entropy coder 30 would also encode those zeros and would then (in step 260) initialize x to 5.

To encode Q(20 j + x), entropy coder 30 first determines which category in a predefined set of categories, as set forth in Table 3, contains the value of quantized coefficient Q(20 j + x).

Table 3

| Category | Range of Values |
|---|---|
| 0 | 0 |
| 1 | -1, 1 |
| 2 | -3 to -2, 2 to 3 |
| 3 | -7 to -4, 4 to 7 |
| 4 | -15 to -8, 8 to 15 |
| 5 | -31 to -16, 16 to 31 |
| 6 | -63 to -32, 32 to 63 |
| 7 | -127 to -64, 64 to 127 |
| 8 | -255 to -128, 128 to 255 |

The category and the number of consecutive zero-valued quantized coefficients (the run-length, which ranges from 0 to 15) are jointly represented as one byte. The value "1" is added to this byte to ensure that the byte is never equal to zero (because a value of zero is used to represent a special end-of-block symbol). The new value of this byte is then selected from the Huffman encoder table that was previously selected. The number of entries in the Huffman encoder tables vary with the class value because the class value limits the range of values for quantized coefficients and thereby limits the number of possible categories. For example, as shown in Table 4, there are forty-nine entries in the Huffman encoder table for a class value of one. These forty-nine entries correspond to the product of the three possible categories (0, 1 or 2) and the sixteen possible run-lengths plus the end-of-block symbol.

| Category | Run Length | Huffman Code |
|---|---|---|
| End-of-Block | | 1010001 |
| 0 | 0 | 0000111 |
| 0 | 1 | 0010111 |
| 0 | 2 | 1100000 |
| 0 | 3 | 1101000 |
| 0 | 4 | 00001100 |
| 0 | 5 | 00101100 |
| 0 | 6 | 00101101 |
| 0 | 7 | 11000010 |
| 0 | 8 | 11000011 |
| 0 | 9 | 000011011 |
| 0 | 10 | 101000000 |
| 0 | 11 | 101000001 |
| 0 | 12 | 101000011 |
| 0 | 13 | 110100100 |
| 0 | 14 | 110100101 |
| 0 | 15 | 110110 |
| 1 | 0 | 01 |
| 1 | 1 | 100 |
| 1 | 2 | 111 |
| 1 | 3 | 0011 |
| 1 | 4 | 1011 |
| 1 | 5 | 00000 |
| 1 | 6 | 00100 |
| 1 | 7 | 10101 |
| 1 | 8 | 11001 |
| 1 | 9 | 000010 |
| 1 | 10 | 001010 |
| 1 | 11 | 101001 |
| 1 | 12 | 110001 |
| 1 | 13 | 110101 |
| 1 | 14 | 110111 |
| 1 | 15 | 0001 |
| 2 | 0 | 11010011 |
| 2 | 1 | 0000110100 |
| 2 | 2 | 10100001000 |
| 2 | 3 | 000011010100 |
| 2 | 4 | 000011010111 |
| 2 | 5 | 101000010011 |
| 2 | 6 | 101000010110 |
| 2 | 7 | 101000010111 |
| 2 | 8 | 0000110101101 |
| 2 | 9 | 0000110101100 |
| 2 | 10 | 1010000100100 |
| 2 | 11 | 0000110101010 |
| 2 | 12 | 00001101010110 |
| 2 | 13 | 1010000100101 |
| 2 | 14 | 00001101010111 |
| 2 | 15 | 10100001010 |

**Table 4**

After encoding the category and run length, the actual value of the quantized coefficient is encoded as an index within the category. This index is represented by a series of bits, known as the amplitude bits, that equals the category. Thus, there are three amplitude bits for category 3 and only one amplitude bit for category 1. The amplitude bits are appended to the end of the Huffman code to create the encoded quantized coefficient $Q_c(20 j + x)$.

After encoding the quantized coefficient, entropy coder 30 determines whether TB exceeds TH (step 264). If not, entropy coder increments x by one (step 266). If the incremented value of x is less than twenty (step 268), entropy coder 30 encodes the next quantized coefficient $Q(20 j + x)$ (step 262).

If the incremented value of x equals twenty (step 268), or if $C(j)$ equals zero (step 256), then entropy coder 30 determines whether j represents the last band in the sorted quantized coefficients $Q(k)$ (step 270). If not, entropy coder 30 gets a new value for j (step 254).

If j represents the last band in the sorted quantized coefficients $Q(k)$ (step 270), or if TB is greater than TH (step 264), entropy coder 30 stops encoding $Q(k)$ (step 272) as noted above.

Referring to Fig. 8, decoder 50 includes a demultiplexer 52 that receives the incoming 24 kilobit per second bit stream and divides it into quantized spectral estimates $Q_{S(j)}$, rate index r, and coded coefficients $Q_c(k)$ (which are decoded after the quantized spectral estimates $Q_{S(j)}$ are decoded). Based on this information, in addition to having copies of the Huffman coding tables used by encoder 10 (Fig. 1) and duplicates of the quantizer rule generator 26 and the DPCM decoder embedded in spectral estimate quantizer 20 of decoder 10, decoder 50 produces an analog audio output signal $O(t)$ that is a close approximation of the analog audio signal $I(t)$ supplied to encoder 10.

A spectral estimate decoder 54 produces decoded quantized spectral estimates $Q_D(j)$ from quantized spectral estimates $Q_{S(j)}$. Spectral estimate decoder 54 decodes the non-Huffman coded symbol (4 bits) for $Q_{S(0)}$, and Huffman decodes the remaining 22 spectral estimates $Q_{S(1)} ... Q_{S(22)}$. A spectral estimate reconstructor 56 then produces reconstructed spectral estimate $S_r(j)$ using a DPCM decoder that is identical to the DPCM decoder embedded in spectral estimate quantizer 20 (Fig. 1). The initial state of the DPCM decoder is set according to the reconstructed level of $Q_{S(0)}$. Next, a quantizer rule generator 26 that is identical to that of encoder 10 (Fig. 1) produces class values $C(j)$ and step sizes $ST(k)$ from the reconstructed spectral estimate $S_r(j)$ and transmitted rate index r for the frame.

An entropy decoder 58 uses the class values $C(j)$ from quantizer rule generator 26 to decode coded coefficients $Q_c(k)$ into decoded coefficients $Q(k)$. Class values $C(j)$ indicate which Huffman decode table to use to decode each coefficient. Entropy decoder 58 also sorts decoded coefficients $Q(k)$ to place decoded coefficients $Q(k)$ in frequency order (as opposed to the class-value order in which they were transmitted by decoder 10). A frequency coefficient reconstructor 60, using step sizes $ST(k)$ converts the decoded coefficients $Q(k)$ into reconstructed frequency coefficients $F_r(k)$. Frequency coefficient reconstructor 60 uses a uniform threshold quantizer, which yields an excellent mean square error match to the original frequency coefficients $F(k)$.

A noise-fill-in module 62 accounts for frequency bands having insufficient signal content and produces frequency coefficients $F_{rn}(k)$ by modifying those frequency bands having insufficient signal content. Noise-fill-in is used on three types of frequency bands: (a) those that were not transmitted because they had class values $C(j)$ equal to zero, (b) those for which all reconstructed frequency coefficients $F_r(k)$ are equal to zero, and (c) those for which the total energy of the reconstructed frequency coefficients $F_r(k)$ is less than the reconstructed spectral estimate $S_r(j)$ corresponding to the $F_r(k)$ by a predetermined amount which, in the illustrated embodiment, equals 6 dB. In each of these cases, random noise having variance equivalent to the square of the corresponding spectral estimate, $(S_r(j))^2$, is injected by replacing the reconstructed frequency coefficients $F_r(k)$ of those frequency bands having insufficient signal content with the random noise. Note that noise-fill-in is not used for the frequency coefficients that are never transmitted because they correspond to unwanted high frequencies ($k > 459$).

Noise-fill-in module 62 allows subjective masking of distortion that would otherwise be audible to the listener if noise-fill-in were not used, which results in a high-quality, low-bit-rate encoder. Noise-fill-in exploits the ear's apparent insensitivity to phase distortion.

Noise-fill-in module 62 uses a zero-mean random number generator to generate noise. The variance of the random generator is adjusted, as noted above, to equal that of the particular spectral estimate $S_r(j)$ being considered. A constant noise coefficient is used as a final adjustment to the noise variance and is used to scale the variance of the injected random noise. In the illustrated embodiment, the noise coefficient equals 2.3.

An inverse transform module 64 then converts each frame of frequency coefficients $F_{rn}(k)$ into a 512 sample frame $O_F(n)$ in the time domain. Prior to performing the conversion inverse transform module 64 sets all values of $F_{rn}(k)$ for k greater than 459 equal to zero and thereby creates a set of 512 frequency coefficients for use as input to the inverse transform. A windowing module 66 outputs the first 480 samples from each frame as digital output signal $O(n)$. Windowing module 66 retains the last 32 samples from each frame and appropriately windows these samples with the first 32 samples of the next frame prior to output. Finally, a digital-to-analog converter 68 converts digital output signal $O(n)$ into an audio output signal, $O(t)$.

In this manner, aesthetically pleasing, high quality audio sound reproduction can be achieved while using only half of the bandwidth typically allowed for the audio signal.

Other embodiments are within the claims. For example, other transforms such as a discrete fourier transform could be substituted for the DCT transform and/or linear prediction techniques could replace spectral estimates. Similarly, arithmetic coding could be substituted for Huffman coding.

APPENDIX

Huffman Encoder Table for Class Value = 2

| Category | Run Length | Huffman Code |
|---|---|---|
| End-of-block | | 010001000100100 |
| 0 | 0 | 0100010010 |
| 0 | 1 | 0100110111 |
| 0 | 2 | 01000100000 |
| 0 | 3 | 01000100011 |
| 0 | 4 | 01101011111 |
| 0 | 5 | 01101011110 |
| 0 | 6 | 010001001100 |
| 0 | 7 | 010011011011 |
| 0 | 8 | 0100010011011 |
| 0 | 9 | 011010111001 |
| 0 | 10 | 010001001101 |
| 0 | 11 | 0100010111110 |
| 0 | 12 | 010001000100101 |
| 0 | 13 | 0100010111111 |
| 0 | 14 | 010001001111010 |
| 0 | 15 | 0110101110000 |
| 1 | 0 | 1 |
| 1 | 1 | 000 |
| 1 | 2 | 0010 |
| 1 | 3 | 0101 |
| 1 | 4 | 00111 |
| 1 | 5 | 01100 |
| 1 | 6 | 001100 |
| 1 | 7 | 010010 |
| 1 | 8 | 011011 |
| 1 | 9 | 0100011 |
| 1 | 10 | 0100111 |
| 1 | 11 | 00110111 |
| 1 | 12 | 01001100 |
| 1 | 13 | 001101100 |
| 1 | 14 | 001101101 |
| 1 | 15 | 0011010 |
| 2 | 0 | 0111 |
| 2 | 1 | 010000 |
| 2 | 2 | 0110100 |
| 2 | 3 | 01101010 |
| 2 | 4 | 010001010 |
| 2 | 5 | 011010110 |
| 2 | 6 | 0100010110 |
| 2 | 7 | 0100110101 |
| 2 | 8 | 01000100001 |
| 2 | 9 | 01000101110 |
| 2 | 10 | 01001101100 |
| 2 | 11 | 01101011101 |
| 2 | 12 | 010001000101 |
| 2 | 13 | 0100010001000 |
| 2 | 14 | 010011011010 |
| 2 | 15 | 0100110100 |
| 3 | 0 | 010001011110 |
| 3 | 1 | 0110101110001 |
| 3 | 2 | 0100010011011 |
| 3 | 3 | 010001001111011 |
| 3 | 4 | 010001001111000 |
| 3 | 5 | 010001001111001 |
| 3 | 6 | 010001000100011 |
| 4 | 7 | 010001001111110 |

12

|   |   |   |
|---|---|---|
| 5 | 8 | 010001001111111 |
| 5 | 9 | 010001001111100 |
| 5 | 10 | 010001001111101 |
| 5 | 11 | 010001001110010 |
| 5 | 12 | 010001001110011 |
| 5 | 13 | 010001001110000 |
| 5 | 14 | 010000100111010 |
| 5 | 15 | 010001001110001 |

Huffman Encoder Table for Class Value = 3

| Category | Run Length | Huffman Code |
|---|---|---|
| End-of-Block | | 01001111100101 |
| 0 | 0 | 01000111110 |
| 0 | 1 | 010001010010 |
| 0 | 2 | 010011111000 |
| 0 | 3 | 0100010100001 |
| 0 | 4 | 0100011100100 |
| 0 | 5 | 0100111111101 |
| 0 | 6 | 0100111110011 |
| 0 | 7 | 01001110001001 |
| 0 | 8 | 01000111001011 |
| 0 | 9 | 01000111111010 |
| 0 | 10 | 010001110010100 |
| 0 | 11 | 01000111111011 |
| 0 | 12 | 010001110010101 |
| 0 | 13 | 01000111111000 |
| 0 | 14 | 010011111001000 |
| 0 | 15 | 010011111001001 |
| 1 | 0 | 1 |
| 1 | 1 | 001 |
| 1 | 2 | 0101 |
| 1 | 3 | 01100 |
| 1 | 4 | 010010 |
| 1 | 5 | 0100001 |
| 1 | 6 | 0100110 |
| 1 | 7 | 01000110 |
| 1 | 8 | 010000000 |
| 1 | 9 | 010001011 |
| 1 | 10 | 010011101 |
| 1 | 11 | 0100010101 |
| 1 | 12 | 0100111001 |
| 1 | 13 | 01000000111 |
| 1 | 14 | 01001110000 |
| 1 | 15 | 0100000010 |
| 2 | 0 | 000 |
| 2 | 1 | 0111 |
| 2 | 2 | 011010 |
| 2 | 3 | 01000100 |
| 2 | 4 | 010000011 |
| 2 | 5 | 010011110 |
| 2 | 6 | 0100011110 |
| 2 | 7 | 01000000110 |
| 2 | 8 | 01000111011 |
| 2 | 9 | 01001111101 |
| 2 | 10 | 010001010001 |
| 2 | 11 | 010001110100 |
| 2 | 12 | 010011111101 |
| 2 | 13 | 01000101000000 |
| 2 | 14 | 01000101000001 |

| | | |
|---|---|---|
| 2 | 15 | 010001010011 |
| 3 | 0 | 011011 |
| 3 | 1 | 010000010 |
| 3 | 2 | 01000111000 |
| 3 | 3 | 010001110011 |
| 3 | 4 | 010011111100 |
| 3 | 5 | 0100111111110 |
| 3 | 6 | 0100111111111 |
| 3 | 7 | 0100111111100 |
| 3 | 8 | 01000111111001 |
| 3 | 9 | 01000111111110 |
| 3 | 10 | 01000111111111 |
| 3 | 11 | 01000111111100 |
| 3 | 12 | 010001110101010 |
| 3 | 13 | 01000111111101 |
| 3 | 14 | 010001110101011 |
| 3 | 15 | 01001110001010 |
| 4 | 0 | 010001110101000 |
| 4 | 1 | 01001110001011 |
| 4 | 2 | 010001110101001 |
| 4 | 3 | 010001110101110 |
| 4 | 4 | 010001110101111 |
| 4 | 5 | 010001110101100 |
| 4 | 6 | 010001110101101 |
| 4 | 7 | 01001110011010 |
| 4 | 8 | 01001110011011 |
| 4 | 9 | 01001110011000 |
| 4 | 10 | 01001110011001 |
| 4 | 11 | 01001110001000 |
| 4 | 12 | 01001110011110 |
| 4 | 13 | 01001110011111 |
| 4 | 14 | 01001110011100 |
| 4 | 15 | 01001110011101 |

Huffman Encoder Table for Class Value = 4

| Category | Run Length | Huffman Code |
|---|---|---|
| End-of-Block | | 00110101011011 |
| 0 | 0 | 0001111111 |
| 0 | 1 | 00110100000 |
| 0 | 2 | 001101010001 |
| 0 | 3 | 0001111001011 |
| 0 | 4 | 0011010000100 |
| 0 | 5 | 00011110010101 |
| 0 | 6 | 00110100010000 |
| 0 | 7 | 00110001100011 |
| 0 | 8 | 00110101011000 |
| 0 | 9 | 00110101011001 |
| 0 | 10 | 00110100011010 |
| 0 | 11 | 001100011000100 |
| 0 | 12 | 001100011000101 |
| 0 | 13 | 001101010110100 |
| 0 | 14 | 001101010110101 |
| 0 | 15 | 001101000010110 |
| 1 | 0 | 1 |
| 1 | 1 | 0000 |
| 1 | 2 | 00111 |
| 1 | 3 | 0001100 |
| 1 | 4 | 0011011 |
| 1 | 5 | 00110010 |

14

| | | |
|---|---|---|
| 1 | 6 | 000111110 |
| 1 | 7 | 001101011 |
| 1 | 8 | 0001111011 |
| 1 | 9 | 00011110000 |
| 1 | 10 | 00011110101 |
| 1 | 11 | 00110101001 |
| 1 | 12 | 00110101010 |
| 1 | 13 | 001100011001 |
| 1 | 14 | 0001111001001 |
| 1 | 15 | 00011111100 |
| 2 | 0 | 01 |
| 2 | 1 | 00010 |
| 2 | 2 | 0001101 |
| 2 | 3 | 00110011 |
| 2 | 4 | 001101001 |
| 2 | 5 | 0011000111 |
| 2 | 6 | 00011111101 |
| 2 | 7 | 000111101001 |
| 2 | 8 | 001100011011 |
| 2 | 9 | 0001111001000 |
| 2 | 10 | 0011000110000 |
| 2 | 11 | 0011010101110 |
| 2 | 12 | 001100011 0100 |
| 2 | 13 | 00110100011011 |
| 2 | 14 | 00110100011000 |
| 2 | 15 | 0011000110101 |
| 3 | 0 | 0010 |
| 3 | 1 | 0001110 |
| 3 | 2 | 001100010 |
| 3 | 3 | 00011110011 |
| 3 | 4 | 000111101000 |
| 3 | 5 | 001101010000 |
| 3 | 6 | 0011010000110 |
| 3 | 7 | 0011010101111 |
| 3 | 8 | 00110100011001 |
| 3 | 9 | 00110100011110 |
| 3 | 10 | 00110100011111 |
| 3 | 11 | 0011010000010111 |
| 3 | 12 | 001101000111 00 |
| 3 | 13 | 001101000010100 |
| 3 | 14 | 001101000010101 |
| 3 | 15 | 00011110010100 |
| 4 | 0 | 00110000 |
| 4 | 1 | 00011110001 |
| 4 | 2 | 0011010000111 |
| 4 | 3 | 00110100011101 |
| 4 | 4 | 001101000101010 |
| 4 | 5 | 001101000101011 |
| 4 | 6 | 00110100010010 |
| 4 | 7 | 001101000101000 |
| 4 | 8 | 001101000101001 |
| 4 | 9 | 001101000101110 |
| 4 | 10 | 001101000101111 |
| 4 | 11 | 001101000101100 |
| 4 | 12 | 001101000101101 |
| 4 | 13 | 00110100010011 |
| 4 | 14 | 001101000100010 |
| 4 | 15 | 001101000100011 |

Huffman Encoder Table for Class Value = 5

15

| Category | Run Length | Huffman Code |
|---|---|---|
| End-of-Block | | 100000011110110 |
| 0 | 0 | 100010001 |
| 0 | 1 | 10000001010 |
| 0 | 2 | 100000011100 |
| 0 | 3 | 100010111011 |
| 0 | 4 | 1000100001110 |
| 0 | 5 | 1000101110100 |
| 0 | 6 | 10000001011010 |
| 0 | 7 | 10001011001110 |
| 0 | 8 | 10001000011110 |
| 0 | 9 | 10001000011111 |
| 0 | 10 | 10001010101110 |
| 0 | 11 | 10000001110111 |
| 0 | 12 | 10001011010110 |
| 0 | 13 | 10001011010111 |
| 0 | 14 | 10001010101111 |
| 0 | 15 | 10001011010100 |
| 1 | 0 | 01 |
| 1 | 1 | 1001 |
| 1 | 2 | 100011 |
| 1 | 3 | 10000010 |
| 1 | 4 | 100000110 |
| 1 | 5 | 1000000110 |
| 1 | 6 | 1000101101 |
| 1 | 7 | 10001000001 |
| 1 | 8 | 100010000000 |
| 1 | 9 | 100000011111 |
| 1 | 10 | 1000000101100 |
| 1 | 11 | 1000100000010 |
| 1 | 12 | 10000001011011 |
| 1 | 13 | 10000001111000 |
| 1 | 14 | 10000001111001 |
| 1 | 15 | 1000100000011 |
| 2 | 0 | 00 |
| 2 | 1 | 1010 |
| 2 | 2 | 10000000 |
| 2 | 3 | 100010100 |
| 2 | 4 | 1000101011 |
| 2 | 5 | 10001011111 |
| 2 | 6 | 100010000101 |
| 2 | 7 | 1000000101111 |
| 2 | 8 | 1000100001100 |
| 2 | 9 | 1000000111010110 |
| 2 | 10 | 10000001110111 |
| 2 | 11 | 10000001110100 |
| 2 | 12 | 10001010101100 |
| 2 | 13 | 10001011010101 |
| 2 | 14 | 10001011000010100 |
| 2 | 15 | 10001010101101 |
| 3 | 0 | 11 |
| 3 | 1 | 100001 |
| 3 | 2 | 100000111 |
| 3 | 3 | 10001010100 |
| 3 | 4 | 100010000100 |
| 3 | 5 | 1000000101110 |
| 3 | 6 | 1000101010100 |
| 3 | 7 | 10001011100010 |
| 3 | 8 | 10000001110101 |
| 3 | 9 | 10001011100011 |
| 3 | 10 | 10001011100000 |

| | | |
|---|---|---|
| 3 | 11 | 100010110001011 |
| 3 | 12 | 100010110001000 |
| 3 | 13 | 10001011100001 |
| 3 | 14 | 100010110001001 |
| 3 | 15 | 100010110001110 |
| 4 | 0 | 1011 |
| 4 | 1 | 10001001 |
| 4 | 2 | 10001011110 |
| 4 | 3 | 1000100001101 |
| 4 | 4 | 10001011100110 |
| 4 | 5 | 10000001111010 |
| 4 | 6 | 1000101110011 |
| 4 | 7 | 100010110001111 |
| 4 | 8 | 10001011100100 |
| 4 | 9 | 100010110001100 |
| 4 | 10 | 100010110001101 |
| 4 | 11 | 10001011100101 |
| 4 | 12 | 100010110000010 |
| 4 | 13 | 100010110000011 |
| 4 | 14 | 100010110000000 |
| 4 | 15 | 10001011001010 |
| 5 | 0 | 1000000100 |
| 5 | 1 | 1000101010101 |
| 5 | 2 | 100010110000001 |
| 5 | 3 | 10001011001011 |
| 5 | 4 | 100010110000110 |
| 5 | 5 | 100010110000111 |
| 5 | 6 | 100010110000100 |
| 5 | 7 | 100010110000101 |
| 5 | 8 | 10001011001000 |
| 5 | 9 | 100010110011010 |
| 5 | 10 | 100010110011011 |
| 5 | 11 | 100010110011000 |
| 5 | 12 | 10Q010110011001 |
| 5 | 13 | 10001011001001 |
| 5 | 14 | 100010110011110 |
| 5 | 15 | 100010110011111 |

Huffman Encoder Table for Class Value = 6

| Category | Run Length | Huffman Code |
|---|---|---|
| End-of-Block | | 000001100100110 |
| 0 | 0 | 000001000 |
| 0 | 1 | 00011101110 |
| 0 | 2 | 000001100101 |
| 0 | 3 | 0000011000000 |
| 0 | 4 | 0000011101010 |
| 0 | 5 | 00011101101111 |
| 0 | 6 | 0000011001100 |
| 0 | 7 | 000001100100111 |
| 0 | 8 | 0000011101010110 |
| 0 | 9 | 000001111110010 |
| 0 | 10 | 000001111110011 |
| 0 | 11 | 000001111110000 |
| 0 | 12 | 0000011101011 |
| 0 | 13 | 000001111110001 |
| 0 | 14 | 000001111110110 |
| 0 | 15 | 000001111110111 |
| 1 | 0 | 11 |
| 1 | 1 | 00010 |

17

| | | |
|---|---|---|
| 1 | 2 | 00000101 |
| 1 | 3 | 000001101 |
| 1 | 4 | 0000011100 |
| 1 | 5 | 00000111011 |
| 1 | 6 | 000001100011 |
| 1 | 7 | 0000011001000 |
| 1 | 8 | 0000011001101 |
| 1 | 9 | 00000111111110 |
| 1 | 10 | 0000011111111 |
| 1 | 11 | 0000011111100 |
| 1 | 12 | 00000111111101 |
| 1 | 13 | 000001111110100 |
| 1 | 14 | 000001111110101 |
| 1 | 15 | 011101011010 |
| 2 | 0 | 01 |
| 2 | 1 | 00001 |
| 2 | 2 | 00011100 |
| 2 | 3 | 0000011110 |
| 2 | 4 | 000001100001 |
| 2 | 5 | 0000011000001 |
| 2 | 6 | 00011101011011 |
| 2 | 7 | 0000011101000 |
| 2 | 8 | 00000110001000 |
| 2 | 9 | 000111011111010 |
| 2 | 10 | 000111011111011 |
| 2 | 11 | 00011101011000 |
| 2 | 12 | 000111011111000 |
| 2 | 13 | 000111011111001 |
| 2 | 14 | 000111011111110 |
| 2 | 15 | 00011101011001 |
| 3 | 0 | 01 |
| 3 | 1 | 000110 |
| 3 | 2 | 0000010010 |
| 3 | 3 | 00011101000 |
| 3 | 4 | 0000011101001 |
| 3 | 5 | 0000011001110 |
| 3 | 6 | 00011101011110 |
| 3 | 7 | 00000110001001 |
| 3 | 8 | 000111011111111 |
| 3 | 9 | 00011101011111 |
| 3 | 10 | 000111011111100 |
| 3 | 11 | 000111011111101 |
| 3 | 12 | 000111011110010 |
| 3 | 13 | 00011101011100 |
| 3 | 14 | 000111011110011 |
| 3 | 15 | 000111011110000 |
| 4 | 0 | 001 |
| 4 | 1 | 0001111 |
| 4 | 2 | 00000111110 |
| 4 | 3 | 0000011000101 |
| 4 | 4 | 00000110010010 |
| 4 | 5 | 00011101011101 |
| 4 | 6 | 00011101010010 |
| 4 | 7 | 00011101010011 |
| 4 | 8 | 000111011110001 |
| 4 | 9 | 000111011110110 |
| 4 | 10 | 00011101010000 |
| 4 | 11 | 000111011110111 |
| 4 | 12 | 000111011110100 |
| 4 | 13 | 000111011110101 |
| 4 | 14 | 00011101010001 |
| 4 | 15 | 000111011001010 |
| 5 | 0 | 000000 |

| | | |
|---|---|---|
| 5 | 1 | 0000010011 |
| 5 | 2 | 0000011001111 |
| 5 | 3 | 00011101010110 |
| 5 | 4 | 00011101010111 |
| 5 | 5 | 000111011001011 |
| 5 | 6 | 000111011001000 |
| 5 | 7 | 00011101010100 |
| 5 | 8 | 000111011001001 |
| 5 | 9 | 000111011001110 |
| 5 | 10 | 000111011001111 |
| 5 | 11 | 00011101010101 |
| 5 | 12 | 000111011001100 |
| 5 | 13 | 000111011001101 |
| 5 | 14 | 000111011000010 |
| 5 | 15 | 00011101101010 |
| 6 | 0 | 00011101001 |
| 6 | 1 | 000111011000011 |
| 6 | 2 | 00011101101011 |
| 6 | 3 | 000111011000000 |
| 6 | 4 | 000111011000001 |
| 6 | 5 | 000111011000110 |
| 6 | 6 | 00011101101000 |
| 6 | 7 | 000111011000111 |
| 6 | 8 | 000111011000100 |
| 6 | 9 | 000111011000101 |
| 6 | 10 | 00011101101001 |
| 6 | 11 | 000111011011010 |
| 6 | 12 | 000111011011011 |
| 6 | 13 | 000111011011000 |
| 6 | 14 | 00011101101110 |
| 6 | 15 | 000111011011001 |

Huffman Encoder Table for Class Value = 7

| Category | Run Length | Huffman Code |
|---|---|---|
| End-of-Block | | 110000000000111 |
| 0 | 0 | 11000001 |
| 0 | 1 | 110000000010 |
| 0 | 2 | 110011010010 |
| 0 | 3 | 1100000000010 |
| 0 | 4 | 110000000011110 |
| 0 | 5 | 110000000011111 |
| 0 | 6 | 11001101100011 |
| 0 | 7 | 1100000000001100 |
| 0 | 8 | 11001100011000 |
| 0 | 9 | 1100000000001101 |
| 0 | 10 | 11001100011001 |
| 0 | 11 | 1100000000000110 |
| 0 | 12 | 1100000000000111 |
| 0 | 13 | 110000000000100 |
| 0 | 14 | 1100000000000100 |
| 0 | 15 | 110000000000101 |
| 1 | 0 | 001 |
| 1 | 1 | 110001 |
| 1 | 2 | 11001111 |
| 1 | 3 | 1100110111 |
| 1 | 4 | 110000000110 |
| 1 | 5 | 1100000001111 |
| 1 | 6 | 11000000000000 |
| 1 | 7 | 1100000000000101 |

| | | |
|---|---|---|
| 1 | 8 | 11000000001110 |
| 1 | 9 | 110011001001010 |
| 1 | 10 | 11001101001110 |
| 1 | 11 | 110011001001011 |
| 1 | 12 | 110011001001000 |
| 1 | 13 | 11001101001111 |
| 1 | 14 | 110011001001001 |
| 1 | 15 | 11001101001100 |
| 2 | 0 | 10 |
| 2 | 1 | 11010 |
| 2 | 2 | 110000001 |
| 2 | 3 | 11001100001 |
| 2 | 4 | 110011000111 |
| 2 | 5 | 1100000000110 |
| 2 | 6 | 110011001001110 |
| 2 | 7 | 11001101001101 |
| 2 | 8 | 11001101000010 |
| 2 | 9 | 110011001001111 |
| 2 | 10 | 11001101000011 |
| 2 | 11 | 110011001001100 |
| 2 | 12 | 110011001001101 |
| 2 | 13 | 11001101000000 |
| 2 | 14 | 110011001000010 |
| 2 | 15 | 11001101000001 |
| 3 | 0 | 01 |
| 3 | 1 | 11011 |
| 3 | 2 | 1100110011 |
| 3 | 3 | 110011000001 |
| 3 | 4 | 1100000001110 |
| 3 | 5 | 11001101000110 |
| 3 | 6 | 11001101000111 |
| 3 | 7 | 11001101000100 |
| 3 | 8 | 110011001000011 |
| 3 | 9 | 11001101000101 |
| 3 | 10 | 110011001000000 |
| 3 | 11 | 11001101011010 |
| 3 | 12 | 110011001000001 |
| 3 | 13 | 11001101011011 |
| 3 | 14 | 110011001000110 |
| 3 | 15 | 110011001000111 |
| 4 | 0 | 000 |
| 4 | 1 | 1100001 |
| 4 | 2 | 11001100010 |
| 4 | 3 | 11001101011000 |
| 4 | 4 | 11001101011001 |
| 4 | 5 | 11001101011110 |
| 4 | 6 | 11001101011111 |
| 4 | 7 | 110011001000100 |
| 4 | 8 | 11000000000110 |
| 4 | 9 | 110011001000101 |
| 4 | 10 | 110011001011010 |
| 4 | 11 | 11001101011100 |
| 4 | 12 | 110011001011011 |
| 4 | 13 | 11001101011101 |
| 4 | 14 | 110011001011000 |
| 4 | 15 | 11001101010010 |
| 5 | 0 | 111 |
| 5 | 1 | 11001110 |
| 5 | 2 | 110011000000 |
| 5 | 3 | 110011001011001 |
| 5 | 4 | 110011001011110 |
| 5 | 5 | 11001101010011 |
| 5 | 6 | 110011010101111 |

20

| | | |
|---|---|---|
| 5 | 7 | 11001101010000 |
| 5 | 8 | 110011001011100 |
| 5 | 9 | 11001101010001 |
| 5 | 10 | 110011001011101 |
| 5 | 11 | 110011001010010 |
| 5 | 12 | 11001101010110 |
| 5 | 13 | 110011001010011 |
| 5 | 14 | 11001101010111 |
| 5 | 15 | 110011001010000 |
| 6 | 0 | 110010 |
| 6 | 1 | 11000000010 |
| 6 | 2 | 11000000000111 |
| 6 | 3 | 110011001010001 |
| 6 | 4 | 11001101010100 |
| 6 | 5 | 110011001010110 |
| 6 | 6 | 110011001010111 |
| 6 | 7 | 11001101010101 |
| 6 | 8 | 110011001010100 |
| 6 | 9 | 11001101101010 |
| 6 | 10 | 110011001010101 |
| 6 | 11 | 11001101101011 |
| 6 | 12 | 110011011001010 |
| 6 | 13 | 11001101101000 |
| 6 | 14 | 110011011001011 |
| 6 | 15 | 110011011001000 |
| 7 | 0 | 1100110001101 |
| 7 | 1 | 110011011001001 |
| 7 | 2 | 110011011001110 |
| 7 | 3 | 11001101101001 |
| 7 | 4 | 110011011001111 |
| 7 | 5 | 11001101101110 |
| 7 | 6 | 110011011001100 |
| 7 | 7 | 11001101101111 |
| 7 | 8 | 110011011001101 |
| 7 | 9 | 11001101100010 |
| 7 | 10 | 11001101101100 |
| 7 | 11 | 110011011000011 |
| 7 | 12 | 11001101101101 |
| 7 | 13 | 110011011000000 |
| 7 | 14 | 11001101100010 |
| 7 | 15 | 110011011000001 |

Huffman Encoder Table for Class Value = 8

| Category | Run Length | Huffman Code |
|---|---|---|
| End-of-Block | | 00101010001010 |
| 0 | 0 | 00101011 |
| 0 | 1 | 0010001110110 |
| 0 | 2 | 0010001110010 |
| 0 | 3 | 0010101000001 |
| 0 | 4 | 00100011101110 |
| 0 | 5 | 00100011101111 |
| 0 | 6 | 00101010011010 |
| 0 | 7 | 00101010011011 |
| 0 | 8 | 001000111000110 |
| 0 | 9 | 00101010011000 |
| 0 | 10 | 00101010011001 |
| 0 | 11 | 00101010011110 |
| 0 | 12 | 00101010011111 |
| 0 | 13 | 00101010011100 |

| | | |
|---|---|---|
| 0 | 14 | 00101010011101 |
| 0 | 15 | 001000111000111 |
| 1 | 0 | 101 |
| 1 | 1 | 0010100 |
| 1 | 2 | 0010001101 |
| 1 | 3 | 001000111010 |
| 1 | 4 | 0010001011100 |
| 1 | 5 | 00100010111010 |
| 1 | 6 | 00101010010010 |
| 1 | 7 | 00101010010011 |
| 1 | 8 | 00101010010000 |
| 1 | 9 | 00101010010001 |
| 1 | 10 | 001010100011010 |
| 1 | 11 | 00101010010110 |
| 1 | 12 | 00101010010111 |
| 1 | 13 | 00101010010100 |
| 1 | 14 | 00101010010101 |
| 1 | 15 | 001000101001010 |
| 2 | 0 | 000 |
| 2 | 1 | 0010000 |
| 2 | 2 | 0010001111 |
| 2 | 3 | 0010001110000 |
| 2 | 4 | 001010100011011 |
| 2 | 5 | 0010001110011 |
| 2 | 6 | 001000101001011 |
| 2 | 7 | 001000101001000 |
| 2 | 8 | 001010100011000 |
| 2 | 9 | 001000101001001 |
| 2 | 10 | 001000101001110 |
| 2 | 11 | 001000101001111 |
| 2 | 12 | 001000101001100 |
| 2 | 13 | 001000101001101 |
| 2 | 14 | 001010100011001 |
| 2 | 15 | 001000101000010 |
| 3 | 0 | 01 |
| 3 | 1 | 001011 |
| 3 | 2 | 00100010110 |
| 3 | 3 | 00100010111011 |
| 3 | 4 | 0010101000000 |
| 3 | 5 | 001000101000011 |
| 3 | 6 | 001000101000000 |
| 3 | 7 | 001000101000001 |
| 3 | 8 | 001000101000110 |
| 3 | 9 | 001000101000111 |
| 3 | 10 | 001010100011110 |
| 3 | 11 | 001000101000100 |
| 3 | 12 | 001000101000101 |
| 3 | 13 | 001000101011010 |
| 3 | 14 | 001000101011011 |
| 3 | 15 | 001000101011000 |
| 4 | 0 | 11 |
| 4 | 1 | 0010010 |
| 4 | 2 | 001000101111 |
| 4 | 3 | 00100011100010 |
| 4 | 4 | 001010100011111 |
| 4 | 5 | 001000101011001 |
| 4 | 6 | 001000101011110 |
| 4 | 7 | 001000101011111 |
| 4 | 8 | 001000101011100 |
| 4 | 9 | 001000101011101 |
| 4 | 10 | 001010100011100 |
| 4 | 11 | 001000101010010 |
| 4 | 12 | 001000101010011 |

| | | |
|---|---|---|
| 4 | 13 | 001000101010000 |
| 4 | 14 | 001000101010001 |
| 4 | 15 | 001000101010110 |
| 5 | 0 | 100 |
| 5 | 1 | 001000100 |
| 5 | 2 | 001000101010111 |
| 5 | 3 | 001000101010100 |
| 5 | 4 | 001000101010101 |
| 5 | 5 | 00101010101010 |
| 5 | 6 | 00101010101011 |
| 5 | 7 | 00101010101000 |
| 5 | 8 | 001010100011101 |
| 5 | 9 | 00101010101001 |
| 5 | 10 | 00101010101110 |
| 5 | 11 | 00101010101111 |
| 5 | 12 | 00101010101100 |
| 5 | 13 | 00101010101101 |
| 5 | 14 | 001010100010010 |
| 5 | 15 | 00101010100010 |
| 6 | 0 | 0011 |
| 6 | 1 | 0010001100 |
| 6 | 2 | 00101010100011 |
| 6 | 3 | 001010100010011 |
| 6 | 4 | 00101010100000 |
| 6 | 5 | 00101010100001 |
| 6 | 6 | 00101010100110 |
| 6 | 7 | 00101010100111 |
| 6 | 8 | 00101010100100 |
| 6 | 9 | 001010100010000 |
| 6 | 10 | 00101010100101 |
| 6 | 11 | 00101010111010 |
| 6 | 12 | 00101010111011 |
| 6 | 13 | 00101010111000 |
| 6 | 14 | 00101010111001 |
| 6 | 15 | 001010100010001 |
| 7 | 0 | 0010011 |
| 7 | 1 | 001010100001 |
| 7 | 2 | 00101010111110 |
| 7 | 3 | 00101010111111 |
| 7 | 4 | 00101010111100 |
| 7 | 5 | 00101010111101 |
| 7 | 6 | 001010100010110 |
| 7 | 7 | 00101010110010 |
| 7 | 8 | 00101010110011 |
| 7 | 9 | 00101010110000 |
| 7 | 10 | 00101010110001 |
| 7 | 11 | 00101010110110 |
| 7 | 12 | 001010100010111 |
| 7 | 13 | 00101010110111 |
| 7 | 14 | 00101010110100 |
| 7 | 15 | 00101010110101 |

Huffman Encoder Table for Class Value = 9

| Category | Run Length | Huffman Code |
|---|---|---|
| End-of-Block | | 0110011001110 |
| 0 | 0 | 011000010 |
| 0 | 1 | 0110011001111 |
| 0 | 2 | 0110101111000 |
| 0 | 3 | 0110101111001 |

| | | |
|---|---|---|
| 0 | 4 | 0110000110100 |
| 0 | 5 | 0110011101110 |
| 0 | 6 | 0110011101111 |
| 0 | 7 | 0110000110101 |
| 0 | 8 | 0110011101100 |
| 0 | 9 | 0110011101101 |
| 0 | 10 | 0110011001100 |
| 0 | 11 | 0110101110010 |
| 0 | 12 | 0110101110011 |
| 0 | 13 | 0110011001101 |
| 0 | 14 | 0110101110000 |
| 0 | 15 | 0110101110001 |
| 1 | 0 | 0001 |
| 1 | 1 | 01100000 |
| 1 | 2 | 0110011100 |
| 1 | 3 | 011010111101 |
| 1 | 4 | 011001110100 |
| 1 | 5 | 0110101110110 |
| 1 | 6 | 0110010000010 |
| 1 | 7 | 0110101110111 |
| 1 | 8 | 0110101110100 |
| 1 | 9 | 0110010000011 |
| 1 | 10 | 0110101110101 |
| 1 | 11 | 0110101001010 |
| 1 | 12 | 0110010000000 |
| 1 | 13 | 0110101001011 |
| 1 | 14 | 0110101001000 |
| 1 | 15 | 0110010000001 |
| 2 | 0 | 001 |
| 2 | 1 | 0110100 |
| 2 | 2 | 01100110001 |
| 2 | 3 | 0110101001001 |
| 2 | 4 | 011000011011 |
| 2 | 5 | 0110101001110 |
| 2 | 6 | 0110010000110 |
| 2 | 7 | 0110101001111 |
| 2 | 8 | 0110101001100 |
| 2 | 9 | 0110010000111 |
| 2 | 10 | 0110101001101 |
| 2 | 11 | 0110101000010 |
| 2 | 12 | 0110101000011 |
| 2 | 13 | 0110010000100 |
| 2 | 14 | 0110101000000 |
| 2 | 15 | 0110101000001 |
| 3 | 0 | 11 |
| 3 | 1 | 011011 |
| 3 | 2 | 01100110010 |
| 3 | 3 | 0110010000101 |
| 3 | 4 | 0110101000110 |
| 3 | 5 | 0110101000111 |
| 3 | 6 | 0110010011010 |
| 3 | 7 | 0110101000100 |
| 3 | 8 | 0110101000101 |
| 3 | 9 | 0110010011011 |
| 3 | 10 | 0110101011010 |
| 3 | 11 | 0110101011011 |
| 3 | 12 | 0110010011000 |
| 3 | 13 | 0110101011000 |
| 3 | 14 | 0110101011001 |
| 3 | 15 | 0110010011001 |
| 4 | 0 | 10 |
| 4 | 1 | 0110001 |
| 4 | 2 | 01101011111 |

| | | |
|---|---|---|
| 4 | 3 | 0110101011110 |
| 4 | 4 | 0110010011110 |
| 4 | 5 | 0110101011111 |
| 4 | 6 | 0110101011100 |
| 4 | 7 | 0110010011111 |
| 4 | 8 | 0110101011101 |
| 4 | 9 | 0110101010010 |
| 4 | 10 | 0110010011100 |
| 4 | 11 | 0110101010011 |
| 4 | 12 | 0110101010000 |
| 4 | 13 | 0110010011101 |
| 4 | 14 | 0110101010001 |
| 4 | 15 | 0110101010110 |
| 5 | 0 | 010 |
| 5 | 1 | 01100101 |
| 5 | 2 | 0110010010010 |
| 5 | 3 | 0110101010111 |
| 5 | 4 | 0110101010100 |
| 5 | 5 | 0110101010101 |
| 5 | 6 | 0110010010011 |
| 5 | 7 | 0110101101010 |
| 5 | 8 | 0110101101011 |
| 5 | 9 | 0110010010000 |
| 5 | 10 | 0110101101000 |
| 5 | 11 | 0110101101001 |
| 5 | 12 | 0110010010001 |
| 5 | 13 | 0110101101110 |
| 5 | 14 | 0110101101111 |
| 5 | 15 | 0110010010110 |
| 6 | 0 | 0000 |
| 6 | 1 | 011001101 |
| 6 | 2 | 0110010010111 |
| 6 | 3 | 0110101101100 |
| 6 | 4 | 0110101101101 |
| 6 | 5 | 0110010010100 |
| 6 | 6 | 0110101100010 |
| 6 | 7 | 0110101100011 |
| 6 | 8 | 0110010010101 |
| 6 | 9 | 0110101100000 |
| 6 | 10 | 0110101100001 |
| 6 | 11 | 0110010001010 |
| 6 | 12 | 0110101100110 |
| 6 | 13 | 0110101100111 |
| 6 | 14 | 0110010001011 |
| 6 | 15 | 0110101100100 |
| 7 | 0 | 0111 |
| 7 | 1 | 01100001100 |
| 7 | 2 | 0110010001000 |
| 7 | 3 | 0110101100101 |
| 7 | 4 | 0110011111010 |
| 7 | 5 | 0110010001001 |
| 7 | 6 | 0110011111011 |
| 7 | 7 | 0110011111000 |
| 7 | 8 | 0110011111001 |
| 7 | 9 | 0110010001110 |
| 7 | 10 | 0110011111110 |
| 7 | 11 | 0110011111111 |
| 7 | 12 | 0110010001111 |
| 7 | 13 | 0110011111100 |
| 7 | 14 | 0110011111101 |
| 7 | 15 | 0110010001100 |
| 8 | 0 | 0110000111 |
| 8 | 1 | 0110010001101 |

| Category | Run Length | Huffman Code |
|---|---|---|
| 8 | 2 | 0110011110010 |
| 8 | 3 | 0110011110011 |
| 8 | 4 | 0110011110000 |
| 8 | 5 | 0110011000010 |
| 8 | 6 | 0110011110001 |
| 8 | 7 | 0110011110110 |
| 8 | 8 | 0110011000011 |
| 8 | 9 | 0110011110111 |
| 8 | 10 | 0110011110100 |
| 8 | 11 | 0110011000000 |
| 8 | 12 | 0110011110101 |
| 8 | 13 | 0110011101010 |
| 8 | 14 | 0110011000001 |
| 8 | 15 | 0110011101011 |

Huffman Encoder Table for Class Value = 10

| Category | Run Length | Huffman Code |
|---|---|---|
| End-of-Block | | 0111000011 |
| 0 | 0 | 0100100000 |
| 0 | 1 | 0111010010 |
| 0 | 2 | 0111010011 |
| 0 | 3 | 01000111000 |
| 0 | 4 | 01000111001 |
| 0 | 5 | 01000111011 |
| 0 | 6 | 0111011110 |
| 0 | 7 | 0111011111 |
| 0 | 8 | 0111011100 |
| 0 | 9 | 0111011101 |
| 0 | 10 | 01000111110 |
| 0 | 11 | 01000110010 |
| 0 | 12 | 01000110011 |
| 0 | 13 | 01000110000 |
| 0 | 14 | 01000110001 |
| 0 | 15 | 01000111111 |
| 1 | 0 | 0110 |
| 1 | 1 | 010010001 |
| 1 | 2 | 01000110110 |
| 1 | 3 | 01110000100 |
| 1 | 4 | 01000110111 |
| 1 | 5 | 01000110100 |
| 1 | 6 | 01000110101 |
| 1 | 7 | 01110000101 |
| 1 | 8 | 0111111010 |
| 1 | 9 | 0111111011 |
| 1 | 10 | 0111111000 |
| 1 | 11 | 0111111001 |
| 1 | 12 | 01001011010 |
| 1 | 13 | 0111111110 |
| 1 | 14 | 0111111111 |
| 1 | 15 | 0111111100 |
| 2 | 0 | 110 |
| 2 | 1 | 01110001 |
| 2 | 2 | 0111111101 |
| 2 | 3 | 0111110010 |
| 2 | 4 | 0111110011 |
| 2 | 5 | 01001011011 |
| 2 | 6 | 0111110000 |
| 2 | 7 | 0111110001 |
| 2 | 8 | 0111110110 |

| | | |
|---|---|---|
| 2 | 9 | 0111110111 |
| 2 | 10 | 01001011000 |
| 2 | 11 | 0111110100 |
| 2 | 12 | 0111110101 |
| 2 | 13 | 01000001010 |
| 2 | 14 | 01000001011 |
| 2 | 15 | 01001011001 |
| 3 | 0 | 001 |
| 3 | 1 | 01110101 |
| 3 | 2 | 01000001000 |
| 3 | 3 | 01000001001 |
| 3 | 4 | 01000001110 |
| 3 | 5 | 01001011110 |
| 3 | 6 | 01000001111 |
| 3 | 7 | 01000001100 |
| 3 | 8 | 01000001101 |
| 3 | 9 | 01000000010 |
| 3 | 10 | 01001011111 |
| 3 | 11 | 01000000011 |
| 3 | 12 | 01000000000 |
| 3 | 13 | 01000000001 |
| 3 | 14 | 01000000110 |
| 3 | 15 | 01001011100 |
| 4 | 0 | 10 |
| 4 | 1 | 0111001 |
| 4 | 2 | 01001011101 |
| 4 | 3 | 01000000111 |
| 4 | 4 | 01000000100 |
| 4 | 5 | 01000000101 |
| 4 | 6 | 01000011010 |
| 4 | 7 | 01001010010 |
| 4 | 8 | 01000011011 |
| 4 | 9 | 01000011000 |
| 4 | 10 | 01000011001 |
| 4 | 11 | 01000011110 |
| 4 | 12 | 01001010011 |
| 4 | 13 | 01000011111 |
| 4 | 14 | 01000011100 |
| 4 | 15 | 01000011101 |
| 5 | 0 | 000 |
| 5 | 1 | 01001001 |
| 5 | 2 | 01000010010 |
| 5 | 3 | 01001010000 |
| 5 | 4 | 01000010011 |
| 5 | 5 | 01000010000 |
| 5 | 6 | 01000010001 |
| 5 | 7 | 01000010110 |
| 5 | 8 | 01001010001 |
| 5 | 9 | 01000010111 |
| 5 | 10 | 01000010100 |
| 5 | 11 | 01000010101 |
| 5 | 12 | 01000101010 |
| 5 | 13 | 01001010110 |
| 5 | 14 | 01000101011 |
| 5 | 15 | 01000101000 |
| 6 | 0 | 111 |
| 6 | 1 | 011101000 |
| 6 | 2 | 01001010111 |
| 6 | 3 | 01000101001 |
| 6 | 4 | 01000101110 |
| 6 | 5 | 01000101111 |
| 6 | 6 | 01000101100 |
| 6 | 7 | 01001010100 |

| | | |
|---|---|---|
| 6 | 8 | 01000101101 |
| 6 | 9 | 01000100010 |
| 6 | 10 | 01000100011 |
| 6 | 11 | 01000100000 |
| 6 | 12 | 01001010101 |
| 6 | 13 | 01000100001 |
| 6 | 14 | 01000100110 |
| 6 | 15 | 01000100111 |
| 7 | 0 | 0101 |
| 7 | 1 | 0100011110 |
| 7 | 2 | 01110000010 |
| 7 | 3 | 01000100100 |
| 7 | 4 | 01000100101 |
| 7 | 5 | 0111101010 |
| 7 | 6 | 0111101011 |
| 7 | 7 | 01110000011 |
| 7 | 8 | 0111101000 |
| 7 | 9 | 0111101001 |
| 7 | 10 | 0111101110 |
| 7 | 11 | 0111101111 |
| 7 | 12 | 01110000000 |
| 7 | 13 | 0111101100 |
| 7 | 14 | 0111101101 |
| 7 | 15 | 0111100010 |
| 8 | 0 | 010011 |
| 8 | 1 | 0111100011 |
| 8 | 2 | 0111100000 |
| 8 | 3 | 01110000001 |
| 8 | 4 | 0111100001 |
| 8 | 5 | 0111100110 |
| 8 | 6 | 0111100111 |
| 8 | 7 | 0111100100 |
| 8 | 8 | 01001000010 |
| 8 | 9 | 0111100101 |
| 8 | 10 | 0111011010 |
| 8 | 11 | 0111011011 |
| 8 | 12 | 0111011000 |
| 8 | 13 | 01001000011 |
| 8 | 14 | 0111011001 |
| 8 | 15 | 01000111010 |

## Claims

1. A method of transmitting a digital signal that includes frames of frequency coefficients arranged in bands, said frequency coefficients for each frame being represented by a frame-determined number of bits, the method comprising for each frame the steps of:

   generating a class value for each of the bands that corresponds to the energy in a band relative to the average energy in the other bands (203),
   reducing said number of bits, when said number of bits exceeds a predetermined threshold, to a value that is less than or equal to said predetermined threshold by eliminating those of said frequency coefficients that belong to the bands having the smallest class values (222), and
   transmitting said frequency coefficients that were not eliminated in said reducing step (226).

2. The method of claim 1, further comprising the step of generating a spectral estimate of the energy in each of the bands (18), wherein said class values are generated based on said spectral estimates.

3. The method of claim 2, further comprising the steps of:

28

generating a step size for each of the frequency coefficients based on the spectral estimate for the corresponding band (158), the step size for a frequency coefficient in a band having relatively higher energy being larger than the step size for a frequency coefficient in a band having relatively lower energy, and

quantizing each of said frequency coefficients based on the relationship between the value of the frequency coefficient and the corresponding step size to produce quantized frequency coefficients (28),

wherein said reducing and transmitting steps operate on said quantized frequency coefficients.

4. The method of claim 2, further comprising the steps of:

generating a step size for each of the frequency coefficients based on the spectral estimate for the corresponding band (158), the step size for a frequency coefficient in a band having relatively higher energy being larger than the step size for a frequency coefficient in a band having relatively lower energy, and

quantizing each of said frequency coefficients based on the relationship between the value of the frequency coefficient and the corresponding step size to produce quantized frequency coefficients (28),

encoding said quantized frequency coefficients using said class values to produce encoded quantized frequency coefficients (30),

wherein said reducing and transmitting steps operate on said encoded quantized frequency coefficients.

5. The method of claim 4 wherein said encoded quantized frequency coefficients are represented by a number of bits, said number being affected by said class values, and said method further comprises the step of modifying said class values to control said number of bits (203, 210, 214, 216, 218).

6. The method of claim 4 wherein said encoding step uses entropy coding (30) in which consecutive quantized frequency coefficients having values of zero are jointly encoded.

7. The method of claim 3 wherein said class values are used in generating said quantized frequency coefficients (28).

8. The method of claim 7 wherein said quantized frequency coefficients are not generated or transmitted for bands having a class value of zero.

**Patentansprüche**

1. Verfahren zum Übertragen eines digitalen Signals, das Blöcke von Frequenzkoeffizienten beinhaltet, die in Bändern angeordnet sind, wobei besagte Frequenzkoeffizienten für jeden Block durch eine blockseitig bestimmte Anzahl von Bits dargestellt sind, wobei das Verfahren für jeden Block die Schritte aufweist:

Erzeugen eines Klassenwertes für jedes der Bänder, der einer Energie in einem Band relativ zur Durchschnittsenergie in den anderen Bändern (203) entspricht,

Verringern der genannten Anzahl von Bits, wenn die genannte Anzahl von Bits eine bestimmte Schwelle übersteigt, auf einen Wert, der kleiner oder gleich der genannten vorbestimmten Schwelle ist, indem von den genannten Frequenzkoeffizienten diejenigen eliminiert werden, die zu den Bändern mit den kleinsten Klassenwerten (222) gehören, und

Übertragen der genannten Frequenzkoeffizienten, die nicht bei dem genannten Verringerungsschritt (226) eliminiert wurden.

2. Verfahren nach Anspruch 1, das außerdem den Schritt des Erzeugens eines spektralen Schätzwertes der Energie in jedem der Bänder (18) aufweist, wobei die genannten Klassenwerte auf der Grundlage der genannten spektralen Schätzwerte erzeugt werden.

3. Verfahren nach Anspruch 2, außerdem die Schritte aufweisend:

Erzeugen einer Schrittgröße für jede der Frequenzkoeffizienten auf Grundlage des spektralen Schätzwertes für das entsprechende Band (158), wobei die Schrittgröße für einen Frequenzkoeffizienten in einem Band mit verhältnismäßig höherer Energie größer ist als die Schrittgröße für einen Frequenzkoeffizienten in einem Band mit verhältnismäßig niedriger Energie, und

Quantisieren jedes der genannten Frequenzkoeffizienten auf Grundlage des Verhältnisses zwischen dem Wert der Frequenzkoeffizienten und der entsprechenden Schrittgröße, um quantisierte Frequenzkoeffizienten (28) zu erzeugen,
wobei die genannten Verringerungs- und Übertragungsschritte an den genannten quantisierten Frequenzkoeffizienten erfolgen.

4. Verfahren nach Anspruch 2, das außerdem die Schritte aufweist:

Erzeugen einer Schrittgröße für jeden der Frequenzkoeffizienten auf Grundlage des spektralen Schätzwertes für das betreffende Band (158), wobei die Schrittgröße für einen Frequenzkoeffizienten in einem Band mit verhältnismäßig höherer Energie größer ist als die Schrittgröße für einen Frequenzkoeffizienten in einem Band mit verhältnismäßig niedriger Energie, und
Quantisieren jedes der genannten Frequenzkoeffizienten auf Grundlage des Verhältnisses zwischen dem Wert des Frequenzkoeffizienten und der entsprechenden Schrittgröße, um quantisierte Frequenzkoeffizienten (28) zu erzeugen,
Codieren der genannten quantisierten Frequenzkoeffizienten unter Verwendung der genannten Klassenwerte, um codierte, quantisierte Frequenzkoeffizienten zu erzeugen,
wobei die genannten Verringerungs- und Übertragungsschritte an den genannten codierten, quantisierten Frequenzkoeffizienten stattfinden.

5. Verfahren nach Anspruch 4, bei dem die genannten codierten, quantisierten Frequenzkoeffizienten durch eine Anzahl von Bits dargestellt sind, wobei besagte Anzahl durch die Klassenwerte beeinflußt wird, und wobei das genannte Verfahren außerdem den Schritt des Modifizierens der genannten Klassenwerte aufweist, um die genannte Anzahl von Bits (203, 210, 214, 216, 218) zu steuern.

6. Verfahren nach Anspruch 4, bei dem der genannte Codierungsschritt die Entropiecodierung (30) anwendet, bei der aufeinanderfolgende, quantisierte Frequenzkoeffizienten, die Werte von null aufweisen, gemeinsam codiert werden.

7. Verfahren nach Anspruch 3, bei dem die genannten Klassenwerte bei der Erzeugung der genannten quantisierten Frequenzkoeffizienten (28) verwendet werden.

8. Verfahren nach Anspruch 7, bei dem die genannten quantisierten Frequenzkoeffizienten für Bänder, die einen Klassenwert von null aufweisen, nicht erzeugt oder übertragen werden.

**Revendications**

1. Procédé de transmission d'un signal numérique qui comprend des structures de coefficients de fréquence disposés en bandes, lesdits coefficients de fréquence pour chaque structure étant représentés par un nombre d'éléments binaires à structure déterminée, ledit procédé comprenant pour chaque structure les étapes consistant à :

engendrer une valeur de classe pour chacune des bandes qui correspond à une énergie dans une bande relative à l'énergie moyenne dans les autres bandes (203),
réduire ledit nombre d'éléments binaires lorsque ledit nombre d'éléments binaires dépasse un seuil prédéterminé, à une valeur qui est inférieure ou égale audit seuil prédéterminé en éliminant ces coefficients de fréquence précités qui appartiennent aux bandes ayant les plus petites valeurs de classe (222), et
transmettre lesdits coefficients de fréquence qui n'ont pas été éliminés dans ladite étape de réduction (226).

2. Procédé selon la revendication 1, comprenant en outre l'étape consistant à engendrer une estimation spectrale de l'énergie dans chacune des bandes (18) où lesdites valeurs de classe sont engendrées en se fondant sur lesdites estimations spectrales.

3. Procédé selon la revendication 2, comprenant en outre les étapes consistant à :

engendrer une étape de taille pour chacun des coefficients de fréquence en se fondant sur l'estimation spectrale pour la bande correspondante (158), le dimensionnement pour un coefficient de fréquence dans une bande présentant une énergie relativement plus élevée étant plus grand que le dimensionnement pour un coefficient de fréquence dans une bande ayant une énergie relativement plus basse, et
quantifier chacun desdits coefficients de fréquence en se fondant sur la relation entre la valeur du coefficient de fréquence et le dimensionnement correspondant pour produire des coefficients de fréquence quantifiés (28),

où lesdites étapes de réduction et de transmission opèrent sur lesdits coefficients de fréquence quantifiés.

4. Procédé selon la revendication 2, comprenant en outre les étapes consistant à :

engendrer une étape de taille pour chacun des coefficients de fréquence en se fondant sur l'estimation spectrale pour la bande correspondante (158), le dimensionnement pour un coefficient de fréquence dans une bande ayant une énergie relativement plus élevée étant plus grand que le dimensionnement pour un coefficient de fréquence dans une bande ayant une énergie relativement plus basse, et

quantifier chacun desdits coefficients de fréquence en se fondant sur la relation entre la valeur du coefficient de fréquence et le dimensionnement correspondant pour produire des coefficients de fréquence quantifiés (28),

coder lesdits coefficients de fréquence quantifiés en utilisant lesdites valeurs de classe pour produire des coefficients de fréquence quantifiés codés,

où lesdites étapes de réduction et de transmission opèrent sur lesdits coefficients de fréquence quantifiés codés.

5. Procédé selon la revendication 4, dans lequel lesdits coefficients de fréquence quantifiés codés sont représentés par un nombre d'éléments binaires, ledit nombre étant affecté par lesdites valeurs de classe, et ledit procédé comprenant en outre l'étape consistant à modifier lesdites valeurs de classe pour contrôler ledit nombre d'éléments binaires (203, 210, 214, 216, 218).

6. Procédé selon la revendication 4, dans lequel ladite étape de codification utilise un codage d'entropie (30) dans lequel des coefficients de fréquence quantifiés consécutifs ayant des valeurs de zéro sont codés ensemble.

7. Procédé selon la revendication 3, dans lequel lesdites valeurs de classe sont utilisées pour engendrer lesdits coefficients de fréquence quantifiés (28).

8. Procédé selon la revendication 7, dans lequel lesdits coefficients de fréquence quantifiés ne sont pas engendrés ou transmis pour des bandes ayant une valeur de classe de zéro.

FIG. 1

FIG. 2

150

```
┌─────────────┐
│   Produce   │──152
│    C(j)     │
└─────────────┘
       │
       ▼
┌─────────────┐
│   Produce   │
│ log₂(SS(j)) │──154
└─────────────┘
       │
       ▼
┌─────────────┐
│  Truncate   │──156
│    C(j)     │
└─────────────┘
       │
       ▼
┌─────────────┐
│   Produce   │
│    ST(k)    │──158
└─────────────┘
```

FIG. 3

FIG. 4

FIG. 5

Sort F(k) — 201

i = l — 202

Generate C(j) — 203

Generate Q(k) — 204

Encode Q(k) — 206

208
TB > TH? N

212
TB < TL? N

220
TB > TC? N

210
r = r - x/i

214
r = r + x/i

222
Reduce TB

216
i = i + 1

224
Insert
End-of-Block

218
i > max? Y

N

Transfer
Qc(k) — 226

200

FIG. 6

Start — 252

250

Get j — 254

C(j) > 0? — 256
N
Y

258 — Get Huffman

260 — Initialize x

262
Encode
Q(20j + x)

264 — TB > TH?
Y
N

x = x+1 — 266

x < 20? — 268
N
Y

Last j? — 270
Y
N

Done — 272

FIG. 7

FIG. 8

EP 0 708 959 B1